# EUROPEAN PATENT APPLICATION

(11) **EP 4 701 292 A2**
(43) Date of publication of application: **25.02.2026**
(21) Application number: 26150837.8
(22) Date of filing: 06.05.2021
(51) Int. Cl.: H04W 60/06

(54) **METHODS AND APPARATUSES FOR NETWORK SLICE ADMISSION CONTROL**

(62) Divisional of application: 21726343.3
(71) Applicant: Lenovo (Singapore) Pte. Ltd., New Tech Park 556741 (SG)
(72) Inventor: VELEV, Genadi, 64291 Darmstadt (DE); SALKINTZIS, Apostolis, 15354 Athens (GR); KARAMPATSIS, Dimitrios, Ruislip, HA4 6ED (GB)
(74) Representative: Openshaw & Co.

(57) **Abstract**

Apparatuses, methods, and systems are disclosed for resolving race conditions during a NSAC update. One apparatus (600) includes a processor (605) and a network interface (640) that communicates with at least one network function in a mobile communication network. Via the network interface (640), the processor (605) receives (705) an indication for preliminary removal of a first device registered with a first network slice. The processor (605) determines (710) a registration status of the first device and selectively removes (715) the first device from a list of devices registered with the first network slice based on the determination.

## Description

### FIELD

The subject matter disclosed herein relates generally to wireless communications and more particularly relates to updating a Network Slice Admission Control Function ("NSACF") and resolving race conditions during the Network Slice Admission Control ("NSAC") update process.

### BACKGROUND

One of the new features introduced in the Third Generation Partnership Project ("3GPP") Fifth Generation ("5G") communication system is the support of network slicing. With the evolution of the 5G system ("5GS") and the network slicing feature, the network slice admission control was introduced. A network slice identified by S-NSSAI can be a subject to Network Slice Admission Control ("NSAC"). The 5GS may include a network slice admission control function ("NSACF") that monitors and controls the number of registered User Equipment ("UE") devices per network slice for those network slices that are subject to NSAC.

### BRIEF SUMMARY

Disclosed are procedures for resolving race conditions during the Network Slice Admission Control ("NSAC") update process. Said procedures may be implemented by apparatus, systems, methods, and/or computer program products.

One method of a network slice admission control function ("NSACF") includes receiving an indication for preliminary removal of a first device registered with a first network slice, said indication received by the NSACF from a first access management function. The method includes determining a registration status of the first device and selectively removing the first device from a list of devices registered with the first network slice based on the determination.

One method of an access management function includes receiving a first request to remove a registration context of a first device, where the first device was previously registered with a first network slice via the first access management function. The method includes determining whether the registration context of the first device was previously retrieved by a second access management function and sending an indication of removal of the first device from a list of a devices registered with the first network slice to a NSACF in response to determining that the registration context of the first device was not previously retrieved.

### BRIEF DESCRIPTION OF THE DRAWINGS

A more particular description of the embodiments briefly described above will be rendered by reference to specific embodiments that are illustrated in the appended drawings. Understanding that these drawings depict only some embodiments and are not therefore to be considered to be limiting of scope, the embodiments will be described and explained with additional specificity and detail through the use of the accompanying drawings, in which:
Figure 1 is a schematic block diagram illustrating one embodiment of a wireless communication system for resolving race conditions during a NSAC update;
Figure 2 is a diagram illustrating one embodiment of a network deployment supporting Network Slice Admission Control ("NSAC");
Figure 3 is a signal flow diagram illustrating one embodiment of a procedure for updating a Network Slice Admission Control Function ("NSACF") during User Equipment ("UE") mobility;
Figure 4 is a flowchart diagram illustrating one embodiment of a procedure for resolving race conditions during the NSAC update process;
Figure 5A is a signal flow diagram illustrating one embodiment of a procedure for using preliminary removal indication to resolve race conditions during the NSAC update process;
Figure 5B is a continuation of the procedure depicted in Figure 5A;
Figure 6 is a signal flow diagram illustrating one embodiment of a procedure for using status check to resolve race conditions during the NSAC update process;
Figure 7A is a signal flow diagram illustrating one embodiment of a procedure for using allowed slice tracking to resolve race conditions during the NSAC update process;
Figure 7B is a continuation of the procedure depicted in Figure 7A;
Figure 8 is a block diagram illustrating one embodiment of a user equipment apparatus that may be used with NSAC;
Figure 9 is a block diagram illustrating one embodiment of a network apparatus that may be used for resolving race conditions during the NSAC update process;
Figure 10 is a flowchart diagram illustrating one embodiment of a method for resolving race conditions during the NSAC update process; and
Figure 11 is a flowchart diagram illustrating another embodiment of a method for resolving race conditions during the NSAC update process.

### DETAILED DESCRIPTION

As will be appreciated by one skilled in the art, aspects of the embodiments may be embodied as a system, apparatus, method, or program product. Accordingly, embodiments may take the form of an entirely hardware embodiment, an entirely software embodiment (including firmware, resident software, micro-code, etc.) or an embodiment combining software and hardware aspects.

For example, the disclosed embodiments may be implemented as a hardware circuit comprising custom very-large-scale integration ("VLSI") circuits or gate arrays, off-the-shelf semiconductors such as logic chips, transistors, or other discrete components. The disclosed embodiments may also be implemented in programmable hardware devices such as field programmable gate arrays, programmable array logic, programmable logic devices, or the like. As another example, the disclosed embodiments may include one or more physical or logical blocks of executable code which may, for instance, be organized as an object, procedure, or function.

Furthermore, embodiments may take the form of a program product embodied in one or more computer readable storage devices storing machine readable code, computer readable code, and/or program code, referred hereafter as code. The storage devices may be tangible, non-transitory, and/or non-transmission. The storage devices may not embody signals. In a certain embodiment, the storage devices only employ signals for accessing code.

Any combination of one or more computer readable medium may be utilized. The computer readable medium may be a computer readable storage medium. The computer readable storage medium may be a storage device storing the code. The storage device may be, for example, but not limited to, an electronic, magnetic, optical, electromagnetic, infrared, holographic, micromechanical, or semiconductor system, apparatus, or device, or any suitable combination of the foregoing.

More specific examples (a non-exhaustive list) of the storage device would include the following: an electrical connection having one or more wires, a portable computer diskette, a hard disk, a random-access memory ("RAM"), a read-only memory ("ROM"), an erasable programmable read-only memory ("EPROM" or Flash memory), a portable compact disc read-only memory ("CD-ROM"), an optical storage device, a magnetic storage device, or any suitable combination of the foregoing. In the context of this document, a computer readable storage medium may be any tangible medium that can contain or store a program for use by or in connection with an instruction execution system, apparatus, or device.

Code for carrying out operations for embodiments may be any number of lines and may be written in any combination of one or more programming languages including an object-oriented programming language such as Python, Ruby, Java, Smalltalk, C++, or the like, and conventional procedural programming languages, such as the "C" programming language, or the like, and/or machine languages such as assembly languages. The code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network ("LAN"), wireless LAN ("WLAN"), or a wide area network ("WAN"), or the connection may be made to an external computer (for example, through the Internet using an Internet Service Provider ("ISP")).

Furthermore, the described features, structures, or characteristics of the embodiments may be combined in any suitable manner. In the following description, numerous specific details are provided, such as examples of programming, software modules, user selections, network transactions, database queries, database structures, hardware modules, hardware circuits, hardware chips, etc., to provide a thorough understanding of embodiments. One skilled in the relevant art will recognize, however, that embodiments may be practiced without one or more of the specific details, or with other methods, components, materials, and so forth. In other instances, well-known structures, materials, or operations are not shown or described in detail to avoid obscuring aspects of an embodiment.

Reference throughout this specification to "one embodiment," "an embodiment," or similar language means that a particular feature, structure, or characteristic described in connection with the embodiment is included in at least one embodiment. Thus, appearances of the phrases "in one embodiment," "in an embodiment," and similar language throughout this specification may, but do not necessarily, all refer to the same embodiment, but mean "one or more but not all embodiments" unless expressly specified otherwise. The terms "including," "comprising," "having," and variations thereof mean "including but not limited to," unless expressly specified otherwise. An enumerated listing of items does not imply that any or all of the items are mutually exclusive, unless expressly specified otherwise. The terms "a," "an," and "the" also refer to "one or more" unless expressly specified otherwise.

As used herein, a list with a conjunction of "and/or" includes any single item in the list or a combination of items in the list. For example, a list of A, B and/or C includes only A, only B, only C, a combination of A and B, a combination of B and C, a combination of A and C or a combination of A, B and C. As used herein, a list using the terminology "one or more of" includes any single item in the list or a combination of items in the list. For example, one or more of A, B and C includes only A, only B, only C, a combination of A and B, a combination of B and C, a combination of A and C or a combination of A, B and C. As used herein, a list using the terminology "one of" includes one and only one of any single item in the list. For example, "one of A, B and C" includes only A, only B or only C and excludes combinations of A, B and C. As used herein, "a member selected from the group consisting of A, B, and C," includes one and only one of A, B, or C, and excludes combinations of A, B, and C." As used herein, "a member selected from the group consisting of A, B, and C and combinations thereof" includes only A, only B, only C, a combination of A and B, a combination of B and C, a combination of A and C or a combination of A, B and C.

Aspects of the embodiments are described below with reference to schematic flowchart diagrams and/or schematic block diagrams of methods, apparatuses, systems, and program products according to embodiments. It will be understood that each block of the schematic flowchart diagrams and/or schematic block diagrams, and combinations of blocks in the schematic flowchart diagrams and/or schematic block diagrams, can be implemented by code. This code may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart diagrams and/or block diagrams.

The code may also be stored in a storage device that can direct a computer, other programmable data processing apparatus, or other devices to function in a particular manner, such that the instructions stored in the storage device produce an article of manufacture including instructions which implement the function/act specified in the flowchart diagrams and/or block diagrams.

The code may also be loaded onto a computer, other programmable data processing apparatus, or other devices to cause a series of operational steps to be performed on the computer, other programmable apparatus or other devices to produce a computer implemented process such that the code which execute on the computer or other programmable apparatus provide processes for implementing the functions/acts specified in the flowchart diagrams and/or block diagrams.

The flowchart diagrams and/or block diagrams in the Figures illustrate the architecture, functionality, and operation of possible implementations of apparatuses, systems, methods, and program products according to various embodiments. In this regard, each block in the flowchart diagrams and/or block diagrams may represent a module, segment, or portion of code, which includes one or more executable instructions of the code for implementing the specified logical function(s).

It should also be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. Other steps and methods may be conceived that are equivalent in function, logic, or effect to one or more blocks, or portions thereof, of the illustrated Figures.

Although various arrow types and line types may be employed in the flowchart and/or block diagrams, they are understood not to limit the scope of the corresponding embodiments. Indeed, some arrows or other connectors may be used to indicate only the logical flow of the depicted embodiment. For instance, an arrow may indicate a waiting or monitoring period of unspecified duration between enumerated steps of the depicted embodiment. It will also be noted that each block of the block diagrams and/or flowchart diagrams, and combinations of blocks in the block diagrams and/or flowchart diagrams, can be implemented by special purpose hardware-based systems that perform the specified functions or acts, or combinations of special purpose hardware and code.

The description of elements in each figure may refer to elements of proceeding figures. Like numbers refer to like elements in all figures, including alternate embodiments of like elements.

Generally, the present disclosure describes systems, methods, and apparatus for resolving race conditions during a NSAC update. In certain embodiments, the methods may be performed using computer code embedded on a computer-readable medium. In certain embodiments, an apparatus or system may include a computer-readable medium containing computer-readable code which, when executed by a processor, causes the apparatus or system to perform at least a portion of the below described solutions.

A network slice identified by S-NSSAI can be a subject to Network Slice Admission Control (NSAC). The NSAC allows the use of the S-NSSAI resources up to a maximum number of registered UEs and/or a maximum number of established PDU Sessions in the S-NSSAI. If the maximum number of registered UEs and/or established PDU Sessions in the S-NSSAI are reached, then new UEs or PDU Sessions are rejected.

The network slice admission control function ("NSACF") monitors and controls the number of registered UEs per network slice for the network slices that are subject to NSAC. The NSACF and AMF are configured via the OAM system that an S-NSSAI is subject to NSAC. The NSACF is configured with the maximum number of registered UEs and/or established PDU Sessions which are allowed to be served by the S-NSSAI that is subject to NSAC.

The NSACF controls (i.e., increase or decrease) the current number of UEs registered with a network slice so that the current number of UEs does not exceed the maximum number of UEs allowed to register with that network slice. The NSACF also maintains a list of UE IDs registered with a network slice that is subject to NSAC. When the current number of UEs registered with a network slice is to be increased, the NSACF first checks whether the UE Identity is already in the list of UEs registered with that network slice and if not, it checks whether the maximum number of UEs per network slice for that network slice has already been reached.

The AMF sends a request to NSACF when the UE registers with or deregisters from the S-NSSAI subject to NSAC, i.e., during the UE Registration procedure in clause 4.2.2.2.2 in 3GPP TS 23.502, UE Deregistration procedure in clause 4.2.2.3 in 3GPP TS 23.502, or UE Configuration Update procedure in clause 4.2.4.2 in 3GPP TS 23.502.

However, current specification does not address how to update the status of the UE in the NSACF when the UE moves between AMFs and the UE context cannot be exchanged between the old and new AMF.

Specifically, when the UE moves from RAN1 area served by AMF1 to RAN2 area served by AMF2 and if the RAN2 and/or AMF2 does not support some of the S-NSSAIs part of the Allowed NSSAI at AMF1, the AMF2 will not update the NSACF that the UE is no longer registered with the S-NSSAI.

The old AMF1 will not update the UE status in the NSACF, as according the current NSAC specification, only the new AMF would update the UE status in the NSACF. As a result, the NSACF would keep the status that the UE is registered with the S-NSSAI#1, but the UE is no longer registered with the S-NSSAI via AMF2. Therefore, a solution is needed to update the NSACF with the correct UE status (i.e., registered or not registered with) for the S-NSSAI.

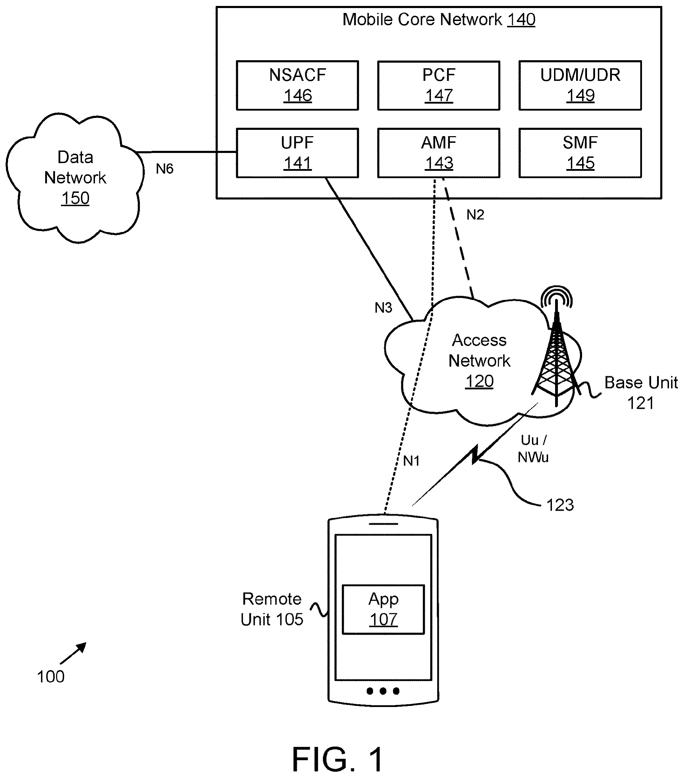

Figure 1 depicts a wireless communication system 100 for resolving race conditions during a NSAC update, according to embodiments of the disclosure. In one embodiment, the wireless communication system 100 includes at least one remote unit 105, an access network 120, and a mobile core network 140. The access network 120 and the mobile core network 140 form a mobile communication network. The access network 120 may be composed of at least one base unit 121. In some embodiments, the remote unit 105 communicates with the access network 120 using wireless (e.g., radio) communication links 123. In other embodiments, the remote unit 105 may communicate with the access network 120 using a wireline communication link. Even though a specific number of remote units 105, access networks 120, base units 121, and mobile core networks 140 are depicted in Figure 1, one of skill in the art will recognize that any number of remote units 105, access networks 120, base units 121, and mobile core networks 140 may be included in the wireless communication system 100.

In one implementation, the access network 120 is compliant with the 5G system specified in the Third Generation Partnership Project ("3GPP") specifications. For example, the access network 120 may be a NG-RAN, implementing NR RAT and/or LTE RAT. In another example, the access network 120 may include non-3GPP RAT (e.g., Wi-Fi^{®} or Institute of Electrical and Electronics Engineers ("IEEE") 802.11-family compliant WLAN). In another implementation, the access network 120 is compliant with the LTE system specified in the 3GPP specifications. More generally, however, the wireless communication system 100 may implement some other open or proprietary communication network, for example Worldwide Interoperability for Microwave Access ("WiMAX") or IEEE 802.16-family standards, among other networks. The present disclosure is not intended to be limited to the implementation of any particular wireless communication system architecture or protocol.

In one embodiment, the remote units 105 may include computing devices, such as desktop computers, laptop computers, personal digital assistants ("PDAs"), tablet computers, smart phones, smart televisions (e.g., televisions connected to the Internet), smart appliances (e.g., appliances connected to the Internet), set-top boxes, game consoles, security systems (including security cameras), vehicle on-board computers, network devices (e.g., routers, switches, modems), or the like. In some embodiments, the remote units 105 include wearable devices, such as smart watches, fitness bands, optical head-mounted displays, or the like. Moreover, the remote units 105 may be referred to as the UEs, subscriber units, mobiles, mobile stations, users, terminals, mobile terminals, fixed terminals, subscriber stations, user terminals, wireless transmit/receive unit ("WTRU"), a device, or by other terminology used in the art. In various embodiments, the remote unit 105 includes a subscriber identity and/or identification module ("SIM") and the mobile equipment ("ME") providing mobile termination functions (e.g., radio transmission, handover, speech encoding and decoding, error detection and correction, signaling and access to the SIM). In certain embodiments, the remote unit 105 may include a terminal equipment ("TE") and/or be embedded in an appliance or device (e.g., a computing device, as described above).

In one embodiment, the remote units 105 may include computing devices, such as desktop computers, laptop computers, personal digital assistants ("PDAs"), tablet computers, smart phones, smart televisions (e.g., televisions connected to the Internet), smart appliances (e.g., appliances connected to the Internet), set-top boxes, game consoles, security systems (including security cameras), vehicle on-board computers, network devices (e.g., routers, switches, modems), or the like. In some embodiments, the remote units 105 include wearable devices, such as smart watches, fitness bands, optical head-mounted displays, or the like. Moreover, the remote units 105 may be referred to as UEs, subscriber units, mobiles, mobile stations, users, terminals, mobile terminals, fixed terminals, subscriber stations, user terminals, wireless transmit/receive unit ("WTRU"), a device, or by other terminology used in the art.

The remote units 105 may communicate directly with one or more of the base units 121 in the access network 120 via uplink ("UL") and downlink ("DL") communication signals. Furthermore, the UL and DL communication signals may be carried over the communication links 123. Here, the access network 120 is an intermediate network that provides the remote units 105 with access to the mobile core network 140.

In some embodiments, the remote units 105 communicate with a remote host (e.g., in the data network 150) via a network connection with the mobile core network 140. For example, an application 107 (e.g., web browser, media client, telephone and/or Voice-over-Internet-Protocol ("VoIP") application) in a remote unit 105 may trigger the remote unit 105 to establish a protocol data unit ("PDU") session (or other data connection) with the mobile core network 140 via the access network 120. The mobile core network 140 then relays traffic between the remote unit 105 and the remote host using the PDU session. The PDU session represents a logical connection between the remote unit 105 and a User Plane Function ("UPF") 141.

In order to establish the PDU session (or PDN connection), the remote unit 105 must be registered with the mobile core network 140 (also referred to as "attached to the mobile core network" in the context of a Fourth Generation ("4G") system). Note that the remote unit 105 may establish one or more PDU sessions (or other data connections) with the mobile core network 140. As such, the remote unit 105 may have at least one PDU session for communicating with the packet data network 150. The remote unit 105 may establish additional PDU sessions for communicating with other data networks and/or other communication peers.

In the context of a 5G system ("5GS"), the term "PDU Session" refers to a data connection that provides end-to-end ("E2E") user plane ("UP") connectivity between the remote unit 105 and a specific Data Network ("DN") through the UPF 141. A PDU Session supports one or more Quality of Service ("QoS") Flows. In certain embodiments, there may be a one-to-one mapping between a QoS Flow and a QoS profile, such that all packets belonging to a specific QoS Flow have the same 5G QoS Identifier ("5QI").

In the context of a 4G/LTE system, such as the Evolved Packet System ("EPS"), a Packet Data Network ("PDN") connection (also referred to as EPS session) provides E2E UP connectivity between the remote unit and a PDN. The PDN connectivity procedure establishes an EPS Bearer, i.e., a tunnel between the remote unit 105 and a Packet Gateway ("PGW", not shown) in the mobile core network 140. In certain embodiments, there is a one-to-one mapping between an EPS Bearer and a QoS profile, such that all packets belonging to a specific EPS Bearer have the same QoS Class Identifier ("QCI").

The base units 121 may be distributed over a geographic region. In certain embodiments, a base unit 121 may also be referred to as an access terminal, an access point, a base, a base station, a Node-B ("NB"), an Evolved Node B (abbreviated as eNodeB or "eNB," also known as Evolved Universal Terrestrial Radio Access Network ("E-UTRAN") Node B), a 5G/NR Node B ("gNB"), a Home Node-B, a Home Node-B, a relay node, a device, or by any other terminology used in the art. The base units 121 are generally part of a radio access network ("RAN"), such as the 3GPP access network 120, that may include one or more controllers communicably coupled to one or more corresponding base units 121. These and other elements of radio access network are not illustrated but are well known generally by those having ordinary skill in the art. The base units 121 connect to the mobile core network 140 via the access network 120.

The base units 121 may serve a number of remote units 105 within a serving area, for example, a cell or a cell sector, via a wireless communication link 123. The base units 121 may communicate directly with one or more of the remote units 105 via communication signals. Generally, the base units 121 transmit DL communication signals to serve the remote units 105 in the time, frequency, and/or spatial domain. Furthermore, the DL communication signals may be carried over the wireless communication links 123. The wireless communication links 123 may be any suitable carrier in licensed or unlicensed radio spectrum. The wireless communication links 123 facilitate communication between one or more of the remote units 105 and/or one or more of the base units 121. Note that during NR operation on unlicensed spectrum (referred to as "NR-U"), the base unit 121 and the remote unit 105 communicate over unlicensed (i.e., shared) radio spectrum.

In one embodiment, the mobile core network 140 is a 5G core network (i.e., "5GC") or an Evolved Packet Core ("EPC") networks, which may be coupled to the packet data networks 150 and 160, like the Internet and private data networks, among other data networks. A remote unit 105 may have a subscription or other account with the non-public mobile core network 140. Additionally, the remote unit 105 may have a subscription or other account with the public mobile core network 140. In various embodiments, each mobile core network 140 belongs to a single mobile network operator ("MNO"). The present disclosure is not intended to be limited to the implementation of any particular wireless communication system architecture or protocol.

The mobile core network 140 includes several network functions ("NFs"). As depicted, the mobile core network 140 includes at least one UPF 141. The mobile core network 140 also includes multiple control plane ("CP") functions including, but not limited to, an Access and Mobility Management Function ("AMF") 143 that serves the access network 120, a Session Management Function ("SMF") 145, a Network Slice Admission Control Function (NSACF") 146, a Policy Control Function ("PCF") 147, a Unified Data Management function ("UDM") and a User Data Repository ("UDR").

The UPF(s) 141 is/are responsible for packet routing and forwarding, packet inspection, QoS handling, and external PDU session for interconnecting Data Network (DN), in the 5G architecture. The AMF 143 is responsible for termination of NAS signaling, NAS ciphering & integrity protection, registration management, connection management, mobility management, access authentication and authorization, security context management. The SMF 145 is responsible for session management (i.e., session establishment, modification, release), remote unit (i.e., UE) IP address allocation & management, DL data notification, and traffic steering configuration of the UPF 141 for proper traffic routing.

As described above, the NSACF 146 monitors and controls the number of registered remote units 105 per network slice for the network slices that are subject to NSAC. The PCF 147 is responsible for unified policy framework, providing policy rules to CP functions, access subscription information for policy decisions in UDR.

The UDM is responsible for generation of Authentication and Key Agreement ("AKA") credentials, user identification handling, access authorization, subscription management. The UDR is a repository of subscriber information and can be used to service a number of network functions. For example, the UDR may store subscription data, policy-related data, subscriber-related data that is permitted to be exposed to third party applications, and the like. In some embodiments, the UDM is co-located with the UDR, depicted as combined entity "UDM/UDR" 149.

In various embodiments, the mobile core network 140 may also include a an Authentication Server Function ("AUSF") (which acts as an authentication server and allows the AMF 141 to authenticate the remote unit 105), a Network Repository Function ("NRF") (which provides NF service registration and discovery, enabling NFs to identify appropriate services in one another and communicate with each other over Application Programming Interfaces ("APIs")), a Network Exposure Function ("NEF") (which is responsible for making network data and resources easily accessible to customers and network partners), or other NFs defined for the 5GC. In certain embodiments, the mobile core network 140 may include an authentication, authorization, and accounting ("AAA") server.

In various embodiments, the each of the mobile core network 140 supports different types of mobile data connections and different types of network slices, wherein each mobile data connection utilizes a specific network slice. Here, a "network slice" refers to a portion of a core network optimized for a certain traffic type or communication service. A network slice instance may be identified by a single-network slice selection assistance information ("S-NSSAI") while a set of network slices for which the remote unit 105 is authorized to use may be identified by network slice selection assistance information ("NSSAI"). Here, "NSSAI" refers to a vector value including one or more S-NSSAI values. In certain embodiments, the various network slices may include separate instances of network functions, such as the SMF 145 and UPF 141. In some embodiments, the different network slices may share some common network functions, such as the AMF 143. The different network slices are not shown in Figure 1 for ease of illustration, but their support is assumed.

Although specific numbers and types of network functions are depicted in Figure 1, one of skill in the art will recognize that any number and type of network functions may be included in the mobile core network 140.

While Figure 1 depicts components of a 5G RAN and a 5G core network, the described embodiments for resolving race conditions during a NSAC update apply to other types of communication networks and RATs, including IEEE 802.11 variants, Global System for Mobile Communications ("GSM", i.e., a 2G digital cellular network), General Packet Radio Service ("GPRS"), Universal Mobile Telecommunications System ("UMTS"), LTE variants, CDMA 2000, Bluetooth, ZigBee, Sigfox, and the like.

Moreover, in an LTE variant where the mobile core network 140 is an EPC, the depicted network functions may be replaced with appropriate EPC entities, such as a Mobility Management Entity ("MME"), a Serving Gateway ("SGW"), a PGW, a Home Subscriber Server ("HSS"), and the like. For example, the AMF 143 may be mapped to an MME, the SMF 145 may be mapped to a control plane portion of a PGW and/or to an MME, the UPF 141 may be mapped to an SGW and a user plane portion of the PGW, the UDM/UDR 149 may be mapped to an HSS, etc.

In the following descriptions, the term "RAN node" is used for the base station but it is replaceable by any other radio access node, e.g., gNB, eNB, Base Station ("BS"), access point, etc. Further, the operations are described mainly in the context of 5G NR. However, the proposed solutions/methods are also equally applicable to other mobile communication systems supporting establishment of multiple concurrent registrations with a mobile network.

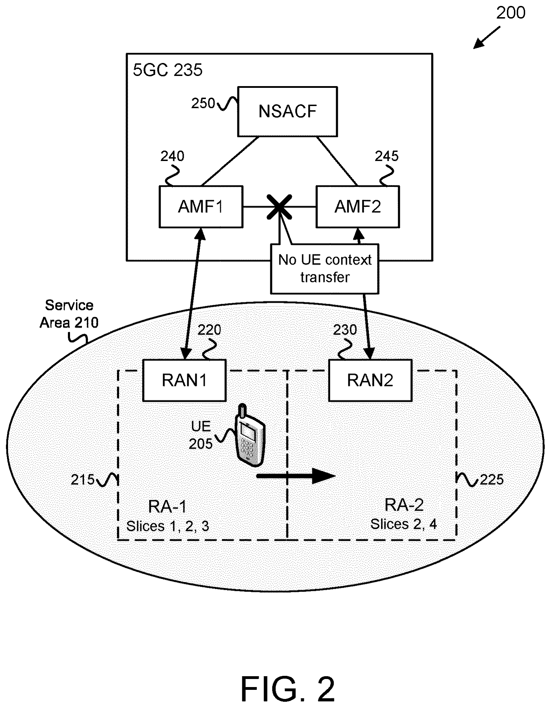

Figure 2 shows a scenario 200 of NSAC during UE mobility, according to embodiments of the disclosure. The scenario 200 involves a UE 205 in a service area 210 of a 5G core network ("5GC") 235. Here, the 5GC 235 includes a first AMF (denoted "AMF1") 240, a second AMF (denoted "AMF2") 245, and a NSACF 250. The UE 205 may be one embodiment of the remote unit 105 and the 5GC may be one embodiment of the mobile core network 140, such that the AMF 1240 and AMF2 245 are instances of the AMF 143 and the NSACF 250 is an instance of the NSACF 146.

The service area 215 includes at least a first RAN area 215 supported by a first RAN (denoted "RAN1") 220 and a second RAN area 225 supported by a second RAN (denoted "RAN2") 230. The first RAN area 215 may be a Tracking Area, a set of one or more Registration Areas, or other grouping of cells supported by RAN node(s) of the RAN1 220. Similarly, the second RAN area 225 may be a Tracking Area, a set of one or more Registration Areas, or other grouping of cells supported by RAN node(s) of the RAN2 230. While depicted as separate, in other embodiments the RAN1 220 and RAN2 230 may be the same RAN or logical divisions of the same RAN. The RAN1 220 and RAN2 230 may be implementations of the Access Network 120.

In the depicted example, the first RAN area 215 is served by the AMF1 240 and supports UE access to a set of network slices, depicted here as 1, 2, and 3. Similarly, the second RAN area 225 is served by the AMF2 245 and supports UE access to a set of network slices, depicted here as 2 and 4. In one embodiment, a first network slice is identified by S-NSSAI#1, a second network slice is identified by S-NSSAI#2, etc. As the UE 205 moves from the first RAN area 215 to the second RAN area 225, UE context transfer is not possible, e.g., due to a missing N10 interface between the AMF1 240 and the AMF2 245.

It is assumed that the UE 205 is registered with the 5GC 235 via an AMF (e.g., AMF1 240) and that the UE 205 is allowed to use one or more network slices (e.g., identified by S-NSSAI#1, S-NSSAI#2, etc.). Some of the network slices may be subject to NSAC, e.g., both S-NSSAI#1 and S-NSSAI#2. The serving AMF (e.g., AMF1 240) updates the NSACF 250 to count the UE 205 as registered for the slices of the Allowed NSSAI which are subject to NSAC, here the S-NSSAI#1 and S-NSSAI#2. The NSACF 250 maintains a list of UEs registered with each S-NSSAI subject to NSAC and stores UE-IDs (SUPIs).

During UE mobility between tracking areas (in any CM-Idle or CM-Connected state) with AMF change, it is possible that the new AMF (e.g., AMF2 245) does not support some of the S-NSSAIs subject to NSAC and/or does not support the NSAC feature. In other words, the new AMF may not support the services to communicate with the NSACF 250. In the depicted example, the AMF2 245 does not support Slice 1 (i.e., S-NSSAI#1). When the UE 205 is registered at the AMF2 245, the S-NSSAI#1 would be rejected to the UE 205. As the AMF2 245 does not know the Allowed NSSAI when the UE 205 was registered at the AMF1 240, the AMF2 245 would not update the NSACF 250 to remove the S-NSSAI#1. This behavior could lead to the situation where the UE 205 is listed as registered with the S-NSSAI#1 (which is subject to NSAC) even after moving to the AMF2 245 which does not support S-NSSAI#1, thereby causing inaccurate NSAC counters and inefficient NSAC.

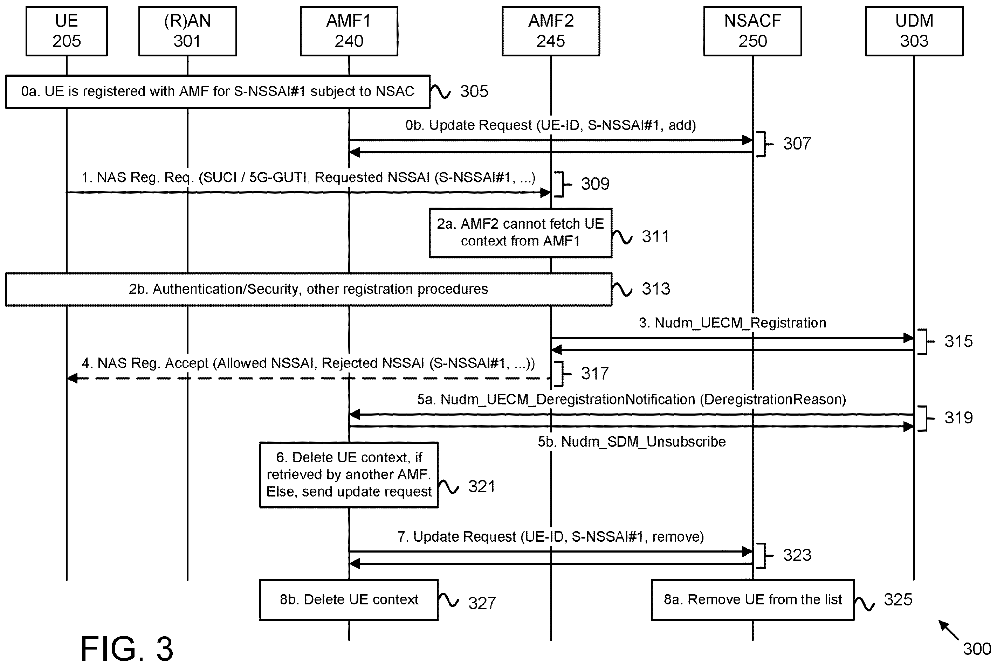

Figure 3 depicts signaling flow for a procedure 300 for updating NSAC during UE mobility, according to embodiments of the disclosure. The procedure 300 involves the UE 205, a (radio) access network (denoted "(R)AN") 301, the first AMF (denoted "AMF1") 240, the second AMF (denoted "AMF2") 245, the NSACF 250, and a UDM 303. The (R)AN 301 may be one embodiment of the Access Network 120 and may include the first RAN area 215 and the second RAN area 220. The UDM 303 may be one embodiment of the UDM aspects of the UDM/UDR 149. In the embodiments of Figure 3, it is assumed that during UE mobility, the UE context cannot be exchanged between the AMF 1 240 and the AMF2 245.

The procedure 300 solves the problem of the NSACF 250 not being updated during UE mobility for the scenario when the UE context cannot be exchanged between the old AMF and the new AMF. In the depicted solution, the old AMF (e.g., AMF1 240) determines to send an update request to the NSACF 250 to remove/delete the UE 205 from the list of UEs registered with a network slice (e.g., S-NSSAI#1), if the old AMF receives a Nudm_UECM_DeregistrationNotification service operation from the UDM 303 and the UE context was not retrieved from another AMF (before receiving the Deregistration Notification from the UDM 303). However, if the old AMF (e.g., AMF1 240) receives a Nudm_UECM_DeregistrationNotification service operation from the UDM 303 and the UE context was retrieved from another AMF, then the AMF determines to not send an update request to the NSACF 250. For this purpose, it is required that the AMF1 240 - which supports NSAC feature - keeps a track (e.g., internal setting or configuration in the AMF) of whether the UE context has been retrieved by another AMF. The detailed description of the Figure 3 is as follows:

At Step 0a, the UE 205 has performed a registration with the AMF1 240 and one or more network slices are included in the Allowed NSSAI (see block 305). In the depicted example, it is assumed that a first network slice (i.e., identified by S-NSSAI#1) is included in the Allowed NSSAI and that S-NSSAI#1 is subject to NSAC.

At Step 0b, the AMF1 240 updates the NSACF 250 to count the UE 205 for S-NSSAI#1, i.e., the NSACF 250 inserts the UE 205 in the list of UEs registered with the S-NSSAI#1 (see messaging 307). For example, the AMF1 240 may invoke a service request to update the NSACF 250 by including at least the following parameters: UE-ID, S-NSSAI#1, and an indication to add (or insert/count) the UE 205. Here, the parameter UE-ID may be the Subscription Permanent Identifier ("SUPI") of the UE 205. Note that the parameter S-NSSAI#1 is network slice identifier for which the update is performed. The NSACF 250 maintains a list of UEs registered for the S-NSSAIs to which NSAC is applied. This list includes the UE-ID (e.g., SUPI) of each UE.

At Step 1, the UE 205 moves to another area (e.g., to another tracking area ("TA")) in the (R)AN 301 and the UE 205 performs NAS registration request procedure (see messaging 309). The NAS registration request message may include at least the UE-ID (e.g., SUCI or 5G-GUTI), the Requested NSSAI (including S-NSSAI#1) and other parameters.

At Step 2a, the AMF2 245 cannot fetch the UE context from the AMF1 240 (see block 311). In one embodiment, this may happen because the AMF1 240 and AMF2 245 are isolated AMFs, i.e., do not have N10 interface. In another embodiment, this may happen because the UE 205 uses the Subscription Concealed Identifier ("SUCI") to register with the network, and thus, the AMF2 245 cannot determine the old AMF identity.

At Step 2b, the AMF2 245 and UE 205 perform the authentication, security and other procedures as part of the registration procedures (e.g., as described in clause 4.2.2.2.2 in 3GPP TS 23.502 - see block 313).

At Step 3, the AMF2 245 invokes Nudm_UECM_Registration service towards the UDM 303 to register as serving AMF for the UE 205 (see messaging 315).

At Step 4, the AMF2 245 completes the registration procedure, e.g., by sending a NAS registration accept message to the UE 205 containing the (new) Allowed NSSAI and, optionally, the Rejected NSSAI (see messaging 317). In the depicted example, it is assumed that the AMF2 245 does not support the requested S-NSSAI#1. Therefore, the Allowed NSSAI does not include S-NSSAI#1, and instead the S-NSSAI#1 is included in the list of rejected S-NSSAIs.

At Step 5a, after the UDM 303 has been updated in Step 3 with a new serving AMF, the UDM 303 invokes Nudm_UECM_DeregistrationNotification service operation towards the old AMF, i.e., the AMF1 240 (see messaging 319). The Deregistration Notification includes a Deregistration Reason which can be one of the following:
- UE Initial Registration
- UE Registration area change
- Subscription Withdrawn
- 5GS to EPS Mobility

At Step 5b, the AMF1 240 sends a Nudm_SDM_Unsubscribe request message to delete its subscription to be notified for any UE subscription changes (see messaging 319).

At Step 6, the AMF1 240 determines whether the UE context was retrieved by another AMF prior to receiving the Deregistration Notification and, if so, deletes the UE context (see block 321). However, recall that in Step 2a the AMF2 245 was not able to fetch the UE context from the AMF1 240. Therefore, in the depicted example the AMF1 240 does not delete the UE context at this time, but instead determines to send an update request to the NSACF 250 to deregister (or delete/remove) the UE status in the NSACF 250.

At Step 7, the AMF1 240 sends update request message to the NSACF 250 including the UE-ID of the UE 205, S-NSSAI#1, and an indication of removal (i.e., reduce the UE count) according to the determination in Step 6 (see messaging 323). As the UE 205 is not registered to the S-NSSAI#1 in the AMF2 245, this step prevents the NSACF 250 from wrongly keeping the UE status as registered with the S-NSSAI#1, even though the UE 205 is not any longer registered with the S-NSSAI#1.

At Step 8a, the NSACF 250 removes the UE 205 from the list of UEs registered with the S-NSSAI#1 (see block 325). When the NSACF 250 removes the UE 205, the NSACF 250 also reduces the counter of registered UEs for the S-NSSAI#1. The NSACF 250 may acknowledge to the AMF 1 240 the removal of the UE-ID.

At Step 8b, the AMF1 240 deletes the UE context of the UE 205 (and clears or terminates all associations with other network functions ("NFs") for this UE 205), e.g., after receiving the acknowledgement from the NSACF 250 (see block 327).

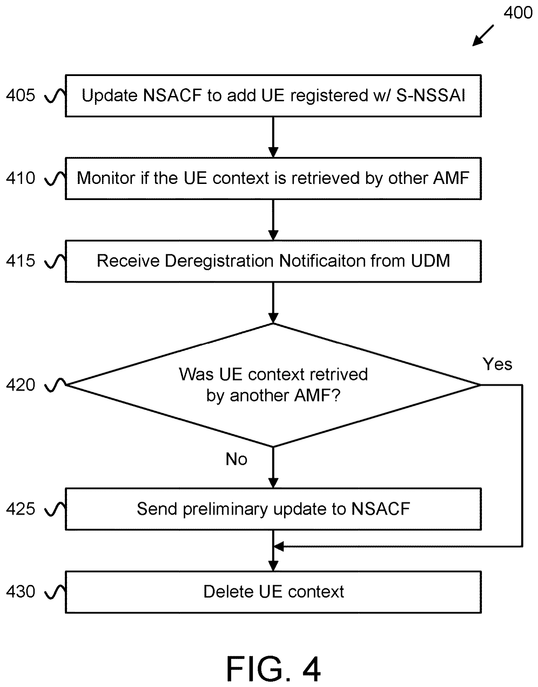

While the solution depicted in Figure 3 works to keep the NSACF 250 up-to-date if the UE 205 has not registered with S-NSSAI#1 via the new AMF (e.g., AMF2 245), in other embodiments the UE 205 may be registered to the S-NSSAI#1 in the AMF2 245. In such cases, the NSACF 250 may wrongly delete the UE 205 from the list of UEs registered with the S-NSSAI#1. Such situation may happen when the AMF2 245 updates the NSACF 250 before the AMF1 240 sends the request for removal. Accordingly, a race condition of the signaling towards NSACF from different AMFs may occur. Figures 4, 5A-5B, 6, and 7A-7B depict alternatives for an enhanced solution which resolves the race condition scenario.

In a first enhanced solution, the old AMF (i.e., AMF1 240) initiates preliminary UE removal. According to the first solution, the NSACF 250 is explicitly informed that the removal of the UE 205 is preliminary, i.e., the AMF1 240 indicates that removal of the UE 205 is insecure or preparatory. The NSACF 250 may then double-check the status of the UE 205 (e.g., with another AMF) before removing/deleting the UE 205 from the list of UE registered with the indicated S-NSSAI.

According to embodiments of the first solution, the AMF (e.g., AMF1 240) determines to send update to the NSACF 250 (i.e., remove the UE 205) if the AMF receives a Deregistration Notification from the UDM 303 and the UE context has not been retrieved by another AMF. Here, the AMF1 240 may send to the NSACF 250 an update request that indicates "preliminary deregistration/removal", signifying that the removal/deletion of the UE 205 is provisional.

In some embodiments, the AMF1 240 may consider the Deregistration Reason sent in the Deregistration Notification from the UDM 303 when determining whether to indicate preliminary removal (or not). For example, if the Deregistration Reason is other than "Subscription Withdrawn," then the AMF1 240 sends the update request to the NSACF 250 to preliminary remove the UE 205. However, if the Deregistration Reason is "Subscription Withdrawn," then the AMF1 240 sends the update request to the NSACF 250 to remove the UE 205 without the preliminary indication (i.e., indicates a secure removal, as the UE is no longer subscribed with the network).

According to embodiments of the first solution, the NSACF 205 may store the AMF-ID for the AMF that most recently has sent update to add/insert the UE 205 for an S-NSSAI. When receiving an update request for "deregistration/removal" or "preliminary deregistration/removal," the NSACF 250 first checks (a) whether the UE 205 is registered and (b) whether the AMF-ID which performs the update is the same as the stored AMF-ID. The following applies depending on the (a) and (b) conditions:
1) If the UE 205 is not registered at the NSACF 250, then there is no need to change any status.
2) If the UE 205 is registered at the NSACF 250 and the last update has been performed by the same AMF, then the NSACF 250 removes the UE 205 from the list of UE registered with the indicated S-NSSAI (and reduces the counter of registered UEs for that S-NSSAI).
3) If the UE 205 is registered at the NSACF 250 and the last update has been performed by a different AMF (i.e., the requesting AMF-ID is different from the AMF-ID stored in the NSACF 250), then the NSACF 250 sends a request for acknowledgement whether the UE 205 is still registered with the S-NSSAI to the AMF which has performed a latest update (i.e., the AMF whose AMF-ID is stored as the NSACF 250).

Note that in the case that UE context can be transferred between AMFs, then the old AMFs and/or the new AMF can determine that the UE 205 is no longer registered with an S-NSSAI (based on comparing the Allowed NSSAI from the old AMF and the new Allowed NSSAI at the new AMF), and therefore, determining that the UE 205 should be removed from NSACF 250. In this case, the AMF (e.g., old or new AMF) sends to the NSACF 250 a request to remove/delete the UE 205 (or decrease the UE count) without the preliminary indication. Here, the NSACF 250 will remove the UE from the list of UEs registered with the indicated S-NSSAI regardless of whether the latest AMF which inserted/added the UE 205 had the same or different AMF-ID.

Figure 4 depicts a procedure 400 performed by an AMF, such as the AMF1 240, according to embodiments of the first solution. The procedure 400 begins as the AMF updates the NSACF to add a UE registered with a S-NSSAI served by the NSACF (see Step 405). The AMF monitors for whether the UE context is retrieved by another AMF (see Step 410). At Step 415, the AMF receives a deregistration notification from the UDM. The AMF then determines whether the UE context was retrieved by another AMF (see Step 420). If yes, then the AMF deletes the UE context (see Step 430) or waits for further signaling from the other/new AMF. Otherwise, if no, the AMF sends a preliminary update to the NSACF (see Step 425) before deleting the UE context at Step 430.

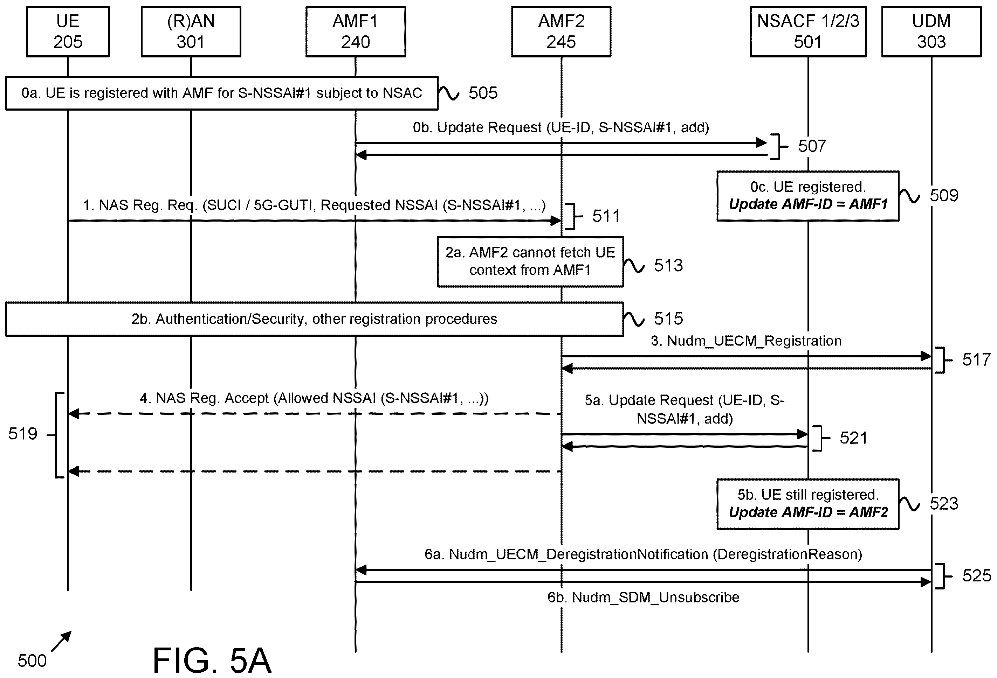

Figures 5A-5B depict signaling flow of a procedure 500 for resolving race conditions during a NSAC update, according to embodiments of the first solution. The procedure 500 involves the UE 205, the (R)AN 301, the first AMF (denoted "AMF1") 240, the second AMF (denoted "AMF2") 245, the UDM 303, and a NSACF 501. Please note that the NSACF 501 may be deployed to serve a single S-NSSAI subject to NSAC, or the same NSACF may serve multiple S-NSSAIs subject to NSAC. In the Figures 5A-5B, the entity shown as "NSACF 1/2/3" 501 is intended to represent any of the cases where the same NSACF may serve multiple S-NSSAIs (e.g., 1, 2, and 3), but also where independent NSACF instances serve a single S-NSSAI#1, S-NSSAI#2 or S-NSSAI#3. The detailed description of the Figures 5A-5B is as follows:

At Step 0a, the UE 205 has performed a registration with the AMF1 240 and one or more network slices are included in the Allowed NSSAI (see block 505). In the depicted example, it is assumed that a first network slice (i.e., identified by S-NSSAI#1) is included in the Allowed NSSAI and that S-NSSAI#1 is subject to NSAC.

At Step 0b, the AMF1 240 updates the NSACF 501 to count the UE 205 for S-NSSAI#1, i.e., the NSACF 501 inserts the UE 205 in the list of UEs registered with the S-NSSAI#1 (see messaging 507). For example, the AMF1 240 may invoke a service request to update the NSACF 501 by including at least the following parameters: UE-ID, S-NSSAI#1, and an indication to add (or insert/count) the UE 205. Here, the parameter UE-ID may be the Subscription Permanent Identifier ("SUPI") of the UE 205. Note that the parameter S-NSSAI#1 is network slice identifier for which the update is performed.

At Step 0c, the NSACF 501 maintains a list of UEs registered for the S-NSSAI it serves (see block 509). This list includes the UE-ID (e.g., SUPI) of each UE added/registered by update requests from one or more AMFs. The NSACF 501 may in addition store the AMF identity (e.g., AMF-ID) of the AMF which has sent the update request to register (or insert or add or increase the count of) the UE 205 for the S-NSSAI. The AMF-ID is stored together with the UE-ID (e.g., SUPI) in the UE status in the NSACF 501.

Per current standards, only the AMF which detects that the UE registration with the S-NSSAI changes (i.e., the UE registers or deregisters) performs the update the NSACF 501. For example, if the UE 205 registers with the S-NSSAI#1 via AMF1 240, the AMF1 240 will send an update to the NSACF 501. If the UE 205 moves to the AMF2 245 and continues to be registered with the S-NSSAI#1, then the AMF2 245 does not send update to the NSACF 501. The NSACF 501 stores in the UE status the AMF1 ID. If the UE 205 later moves to a third AMF and then the UE 205 deregisters from the S-NSSAI, then the third AMF would update the NSACF 501 to remove the UE 205.

In one alternative, each AMF may send updates to the NSACF 501 if the UE 205 is registered with the S-NSSAI. In the above example, when the UE 205 moves to the AMF2 245, the AMF2 245 would send update to the NSACF 501. The UE status in the NSACF 501 would then be updated with storing the AMF-ID of AMF2. As a result, the NSACF 501 always stores the AMF-ID at which the UE 205 is currently registered. For example, the NSACF 501 can use AMF-ID to sends a request to the AMF for the specific UE 205 or to compare the AMF-IDs in case of preliminary UE removal as described later in Step 8. In one example, if the NSACF 501 wants to trigger deregistration of the UE 205 for the S-NSSAI (or reject the UE 205 to use the S-NSSAI), the NSACF 501 can use the stored AMF-ID to send the request to the AMF for this UE 205. To allow this alternative, the NSACF 501 may be able to send signaling to configure (or instruct) the AMFs whether a) to send update request to the NSACF 501each time when the UE 205 moves between AMFs and the UE 205 is continues to be registered with the S-NSSAI registration, or b) to send update request to the NSACF 501 only when the UE registration status to the S-NSSAI changes. The option b) is as per current standards. In other words, the NSACF 501 may configure the reporting (or update) mode in the AMFs whether to perform option a) or b). This configuration signaling from the NSACF 501 to the AMFs is not shown in Figure 5A.

At Step 1, the UE 205 moves to another area (e.g., to another tracking area ("TA")) in the (R)AN 301 and the UE 205 performs NAS registration request procedure (see messaging 511). The NAS registration request message may include at least the UE-ID (e.g., SUCI or 5G-GUTI), the Requested NSSAI (including S-NSSAI#1) and other parameters.

At Step 2a, the AMF2 245 cannot fetch the UE context from the AMF1 240 (see block 513). In one embodiment, this may happen because the AMF1 240 and AMF2 245 are isolated AMFs, i.e., do not have N10 interface. In another embodiment, this may happen because the UE 205 uses the Subscription Concealed Identifier ("SUCI") to register with the network, and thus, the AMF2 245 cannot determine the old AMF identity.

At Step 2b, the AMF2 245 and UE 205 perform the authentication, security and other procedures included in the registration procedures (e.g., as in clause 4.2.2.2.2 in 3GPP TS 23.502 - see block 515).

At Step 3, the AMF2 245 invokes Nudm_UECM_Registration service towards the UDM 303 to register as serving AMF for the UE 205 (see messaging 517).

At Step 4, the AMF2 245 completes the registration procedure, e.g., by sending a NAS registration accept message to the UE 205 containing the (new) Allowed NSSAI and, optionally, the Rejected NSSAI (see messaging 519). In the depicted example, it is assumed that the AMF2 245 does support the requested S-NSSAI#1. Therefore, the Allowed NSSAI includes S-NSSAI#1.

Note that Step 5 may be performed before or after sending the Registration Accept message (or in some cases the UE Configuration Update Command message) to the UE 205. The timing of Step 5 depends on whether the Early Admission Control ("EAC") mode has been configured in the AMF2 245 for the S-NSSAI#1. If EAC is activated, then Step 5 is performed before the AMF2 245 sends a Registration Accept message (or in some cases the UE Configuration Update Command message) to the UE 205. Otherwise, if the EAC mode is not activated, the AMF2 245 performs Step 5 after sending the Registration Accept message (or in some cases the UE Configuration Update Command message) to the UE 205.

At Step 5a, because the AMF2 245 does not have old Allowed NSSAI, the AMF2 245 performs the NSAC update procedure for all S-NSSAIs included in the Allowed NSSAI and subject to NSAC (see messaging 521). In the particular example, the UE 205 is registered to S-NSSAI#1 and the AMF2 sends an update request to the NSACF 501 to add/insert the UE 205 in the list of UEs registered to the S-NSSAI (or to update the NSACF 501 to increase the count with the UE 205). In addition, the AMF2 245 may send its own identifier (e.g., AMF2-ID) in the payload of the update request message to the NSACF 501.

At Step 5b, because the NSACF 501 stores a UE status for this UE-ID, i.e., the UE 205 is registered with the S-NSSAI (see block 523). If the NSACF 501 receives an update to add the UE 205, the NSACF 501 will keep the UE status, but NSACF 501 may notice that something might have happened with the UE registration because usually, according to the current standards, the new AMF does not send update request to add the UE 205 when the UE 205 was already registered with the S-NSSAI. Even if the maximum number of UEs has been reached, the UE 205 is admitted to continue using the S-NSSAI. The NSACF 501 updates the AMF-ID, namely the AMF-ID = AMF2, in order to keep track of the last AMF which performed the UE update to add/insert the UE 205. The NSACF 501 may use the AMF2-ID from the payload of the update request message in Step 5a (i.e., explicit parameter included in the message), or may use the source network function ID which had invoked the service operation, i.e., had sent the update request message (e.g., NSACF takes the sourced network function ID).

At Step 6a, after the UDM 303 has been updated in Step 3 with a new serving AMF, the UDM 303 invokes Nudm_UECM_DeregistrationNotification service operation towards the old AMF, i.e., the AMF1 240 (see messaging 525). The Deregistration Notification includes a Deregistration Reason which can be one of the reasons discussed above with reference to Figure 3.

At Step 6b, the AMF1 240 sends a Nudm_SDM_Unsubscribe request message to delete its subscription to be notified for any UE subscription changes (see messaging 525).

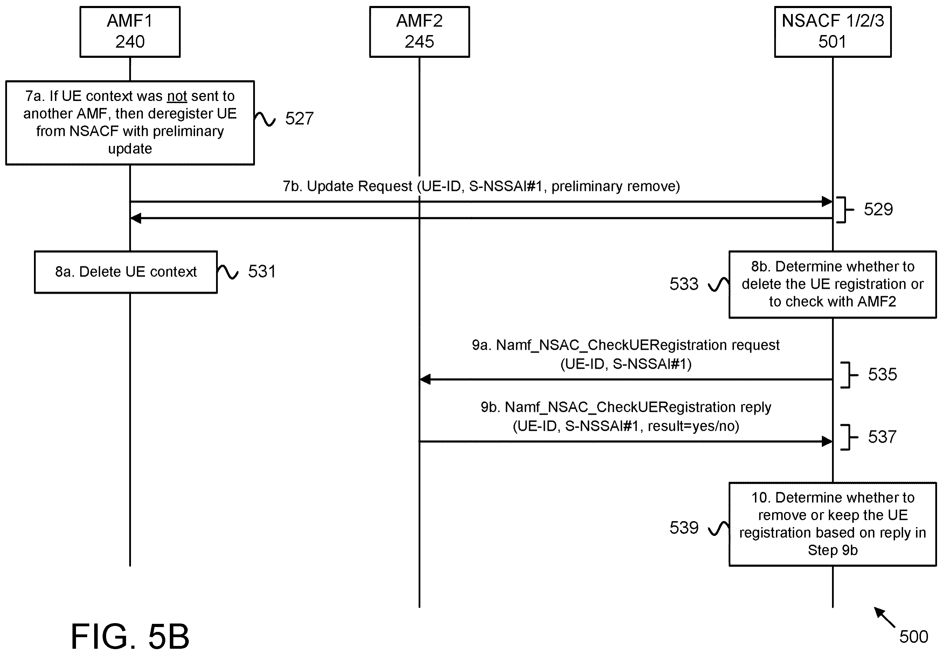

Continuing on Figure 5B, at Step 7a, the AMF1 240 evaluates whether an update to the NSACF 501 is needed before deleting the UE context (see block 527). The AMF1 240 determines the following:
- If the AMF 1 240 receives a Deregistration Notification from the UDM 303 and the UE 205 context has not been retrieved by another AMF, then the AMF1 240 determines to send update to NSACF 501 (i.e., remove the UE 205 from the list of UEs registered with the S-NSSAI). In addition, the AMF 1 240 includes an indication that the removal (or deregistration or decreasing the number of) UE 205 is insecure, i.e., the update is preliminary/provisional.
- If the AMF1 240 receives a Deregistration Notification from the UDM 303 and if UE 205 context has been retrieved by another AMF, then the AMF1 240 does not send update to NSACF 501.

At Step 7b, the AMF1 240 sends update request message to NSACF 501 including the UE-ID, S-NSSAI#1, and an indication of "preliminary removal" according to Step 7a (see messaging 529). The AMF1 240 may use an existing service operation, e.g., Nnsacf_NSAC _Check Request or Nnsacf_NSAC _Update Request, where a new indication is included that the update request is preliminary or preparatory. In addition, the AMF1 240 may send its own identifier (e.g., AMF1-ID) in the payload of the request message to the NSACF 501.

At Step 8a, the AMF1 240 deletes the UE context of the UE 205 (and clears or terminates all associations with other NFs for this UE 205), e.g., after receiving the acknowledgement from the NSACF 501 (see block 531).

At Step 8b, when receiving an update request for "preliminary deregistration/update", the NSACF 501 first checks whether the UE 205 is registered and the AMF-ID which performed the last registration. The NSACF 501 may store AMF-ID for each UE registration. The following applies:
1) If the UE status is not registered at the NSACF 501, then there is no need to change any status.
2) If the UE status is registered with the S-NSSAI at the NSACF 501 and the last update has been performed by the same AMF (i.e., AMF-ID is the AMF1), the NSACF 501 removes the UE 205 from the list of UEs registered with the indicated S-NSSAI (and reduces the counter of registered UEs for that S-NSSAI).
3) If the UE status is registered with the S-NSSAI at the NSACF 501 and the last update has been performed by a different AMF (i.e., requesting AMF-ID is different from AMF-ID stored in the NSACF 501), the NSACF 501 sends to the AMF, which has performed a latest update, a request for acknowledgement (i.e., to verify) whether the UE 205 is still registered with the S-NSSAI.
When the NSACF 501 removes the UE 205, the NSACF 501 also reduces the counter of registered UEs for the S-NSSAI#1.

At Step 9a, in the case of Step 8b-3, the NSACF 501 sends a request to the stored AMF (i.e., AMF2 245) to verify whether the UE 205 is registered with the S-NSSAI#1 (see messaging 535). Note that a new service may be offered by the AMF for this purpose. For example, the NSACF 501 may use the service operation Namf_NSAC_CheckUERegistration request (UE-ID, S-NSSAI#1). Using this service, the NSACF 501 requests the AMF (i.e., AMF2 245) to check whether the UE 205 is registered with S-NSSAI#1.

At Step 9b, the AMF2 245 replies to the request in Step 9a (see messaging 537). Here, the AMF2 245 sends a reply to the NSACF 501 containing the result of the registration of the UE 205 to the S-NSSAI#1. For example, if the S-NSSAI#1 is in the list of Allowed NSSAI for the UE 205, then the AMF2 245 sends a positive result. If the S-NSSAI#1 is not in the list of Allowed NSSAI for the UE 205, then the AMF2 245 sends a negative result.

For example, the AMF2 245 may reply with the service operation Namf_NSAC_CheckUERegistration reply (UE-ID, S-NSSAI#1, result=yes/no), where the indication/parameter "result=yes/no" indicates positive or negative result, respectively.

At Step 10, the NSACF 501 determines whether to remove or keep the UE 205 in the list of UEs registered with the S-NSSAI#1 based on the reply in Step 9b (see block 539). If the result in step 9b is positive (e.g., "result=yes"), then the NSACF 501 determines to keep UE 205 in the list of UEs registered with the S-NSSAI#1. However, if the result in the reply in Step 9b is negative (e.g., "result=no"), then the NSACF 501 determines to remote the UE 205 from said list. If the NSACF 501 removes the UE 205, then the NSACF 501 also reduces the counter of registered UEs for the S-NSSAI#1.

The benefit of the first solution depicted in Figures 5A-5B is that the signaling generated from AMF1 240 (acting as old AMF) to the NSACF 501 is limited (compared to the case when the AMF1 240 would always send an update request), i.e., the AMF1 240 only sends an update request for preliminary removal of the UE 205 if the UE context has not been retrieved by another AMF before the Deregistration Notification is received from the UDM 303. Further, the NSACF 501 only performs signaling to double-check (i.e., verify) with the AMF2 245 if the stored AMF-ID is different from the AMF-ID of the requesting AMF (i.e., AMF1 240). In summary, the proposed solution adds additional signaling only in the cases where the race condition may occur in order to accurately update the NSACF 501.

In one alternative to the solution depicted in Figure 5A-5B, the NSACF 501 may implicitly determine that a UE 205 is not any longer registered with a network slice. Such a solution would be applicable in case of a common NSACF 501 serving multiple or all of the S-NSSAIs to which the UE 205 is registered.

For example, when the NSACF 501 receives an update request for the UE 205 from a new AMF-ID (i.e., the requesting AMF has AMF-ID different from the stored AMF-ID in the NSACF 501) and the request include addition (or insertion) of the UE 205 for S-NSSAI#2, but not for S-NSSAI#1, the NSACF 501 may implicitly determine that the UE 205 is not any longer registered with S-NSSAI#1. Subsequently, the NSACF 501 can remove the UE-ID from the registration with the S-NSSAI#1.

In one alternative to step 5 of Figure 5A, it may happen that the UE moves from the AMF1 240 to the AMF2 245, but the AMF2 245 is restricted (or suspended) to send update requests to the NSACF. This may happen due to the fact that the maximum number of UEs for the S-NSSAI has been reached in the NSACF 501 and the NSACF 501 has instructed the AMF2 245 to restrict update requests to register new UEs to the S-NSSAI. Usually, the AMF2 245 would reject the S-NSSAI to the UE 205 without asking the NSACF 501, even though the UE 205 is currently registered and admitted to use the S-NSSAI. To avoid such S-NSSAI rejection by AMF2 245, an exception to the restricted (or suspended) signaling from the AMF2 245 may be proposed. If the UE 205 is performing a mobility registration procedure (i.e., mobility type of registration) and the AMF2 245 cannot retrieve the UE context from the AMF1 240, the AMF2 245 is allowed to send update request to the NSACF 501. The AMF2 245 would not be allowed to send update request for a UE performing initial type registration procedure.

In a second solution for resolving race conditions during the NSAC update process, the old AMF (i.e., AMF1) initiates the check with the NSACF before performing an update of UE status at NSACF. The second solution requires that the distinct procedures (a) for UE-status-check and (b) for update are available between the AMF and NSACF.

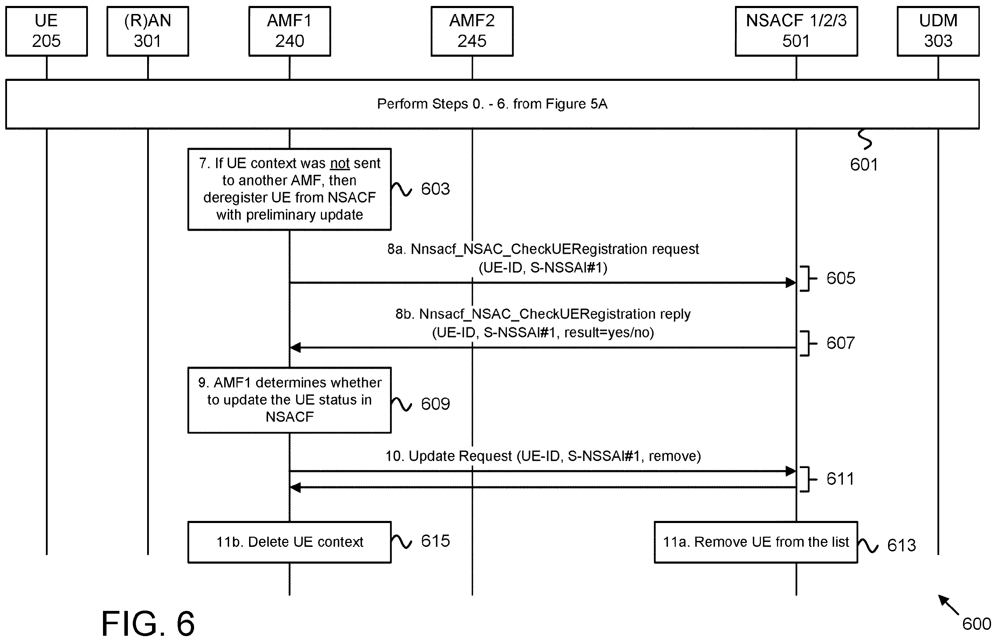

Figure 6 depicts signaling flow of a procedure 600 for resolving race conditions during the NSAC update process, according to embodiments of the second solution. The procedure 600 involves the UE 205, the (R)AN 301, the first AMF (denoted "AMF1") 240, the second AMF (denoted "AMF2") 245, the UDM 303, and a NSACF 501. The detailed description of the Figure 6 is as follows:

As a prerequisite, the second solution assumes that Steps 0.-6. from Figure 5A is performed (see block 601).

At Step 7, when the AMF1 240 receives a Deregistration Notification (e.g., as per step 6a in Figure 5B) and the UE context has not been retrieved by another AMF, the AMF1 240 decides to perform check with the NSACF 501 about the current status of UE 205 (see block 603). Note that this step is performed before the UE context is deleted in AMF1 240.

At Step 8a, the AMF1 240 sends a request to check the current status of the UE 205 in the NSACF 501 (see messaging 505). For example, the AMF1 240 may use a new service operation Nnsacf_NSAC_CheckUEStatus request (UE-ID, S-NSSAI#1). The service operation is specific to check with the NSACF 501 the current status of UE 205 for the network slice S-NSSAI#1.

Alternatively, an existing service operation Nnsacf_NSAC_Check Request or Nnsacf_NSAC_Update Request may be used with a new indication that the request message is to check the current status of the UE 205 in the NSACF 501.

At Step 8b, the NSACF 501 sends a response to the AMF1 including the result of the UE status check (see messaging 507). The result may be 'registered' or 'not registered.' Alternatively, the result may indicate 'yes" for registered and "no' for not registered.

In addition, the response may indicate the AMF-ID of the last AMF to have added (or registered) the UE 205 in the NSACF 501. The AMF-ID may be included only if the result is that the UE 205 is registered for the S-NSSAI.

At Step 9, based on the result received in step 3a, the AMF1 240 determines to perform one of the following actions:
1) If the result is that the UE 205 is not registered at NSACF 501, then the AMF1 240 does not need to perform further action and may proceed to delete the UE context.
2) If the result is that the UE 205 is registered by another AMF-ID (i.e., AMF2), then the AMF1 240 does not need to perform further action and may proceed to delete the UE context. Here, the AMF 1 240 assumes that the UE status is managed by AMF2 245.
3) If the result is that the UE 205 is registered and the AMF-ID points to AMF1, then the AMF1 240 decides to send an update request to the NSACF 501 to remove (or deregister) the UE 205 with the S-NSSAI#1.

At Step 10, the AMF1 sends an update request to the NSACF 501 to remove (or deregister) the UE 205 from the S-NSSAI#1. For example, the AMF1 may send Nnsacf_NSAC_Update Request (UE-ID, S-NSSAI#1, remove), where the indication "remove" means that the UE-ID is to be deleted from the list of UEs registered with the S-NSSAI#1. Note that this is not the preliminary removal indication discussed above.

At Step 11a, the NSACF 501 removes the UE 205 from the list of UEs registered with the S-NSSAI#1 (see block 613). When the NSACF 501 removes the UE 205, the NSACF 501 also reduces the counter of registered UEs for the S-NSSAI#1. Note that because the removal indication does not indicate a preliminary removal, the NSACF 501 does not verify (i.e., double-check) before removing the UE 205 from the list. The NSACF 501 may acknowledge the removal of the UE-ID.

At Step 11b, the AMF1 240 deletes the UE context of the UE 205 and (clears or terminates all associations with other NFs for this UE 205), e.g., after receiving the acknowledgement from the NSACF 501 (see block 615).

The benefit is the second solution described in Figure 6 is that the NSACF 501 is not required to perform double-checking with another AMF as shown in Figure 5B. Instead, the NSACF 501 offers a service operation (e.g., used by AMF1 240) to perform a check of the UE status in NSACF 501. The AMF1 240 initiates a check procedure with the NSACF 501 before deciding whether to remove the UE 205 from the NSACF 501. It is required that the distinct UE-status-check and update procedures are available between the AMF and NSACF 501.

In a third solution, the UDM has a central role in resolving race conditions during the NSAC update process. According to embodiments of the third solution, the AMF sends the current Allowed NSSAI of the UE 205 to the UDM. The UDM stores the current Allowed NSSAI in the UE's context.

When a new AMF retrieves the UE subscription data from the UDM, the new AMF would also receive the latest Allowed NSSAI. The new AMF determines the new Allowed NSSAI and may compare it with the latest Allowed NSSAI (receives from the UDM). The new AMF can determine the S-NSSAIs to which the UE 205 is not registered in the new AMF and the new AMF can correspondingly update the UDM.

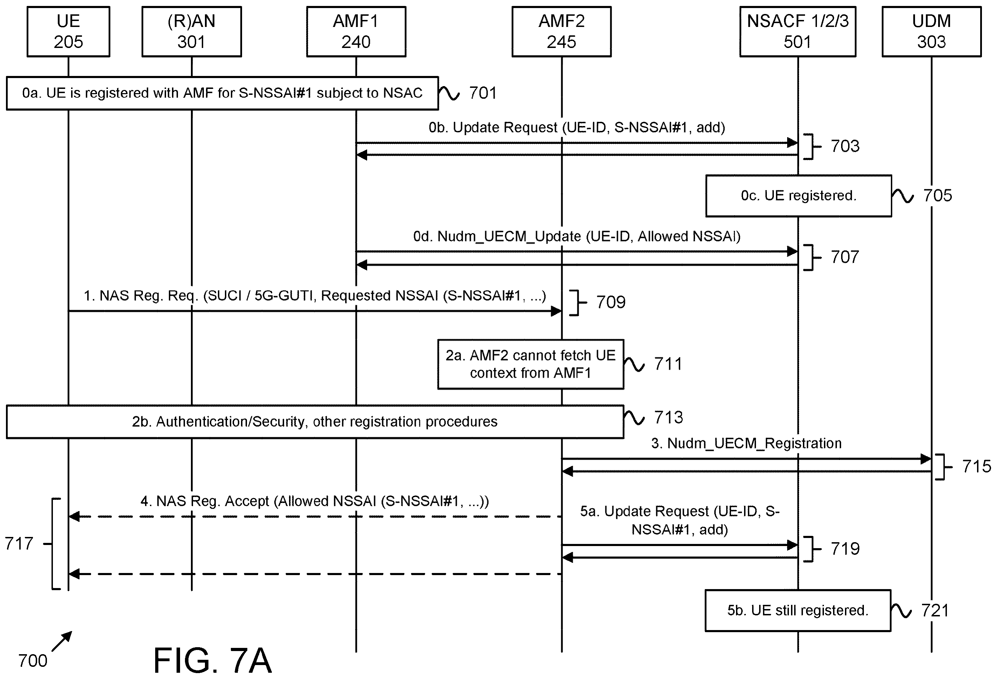

Figures 7A-7B depict signaling flow of a procedure 700 for resolving race conditions during the NSAC update process, according to the third solution. The procedure 700 involves the UE 205, the (R)AN 301, the first AMF (denoted "AMF1") 240, the second AMF (denoted "AMF2") 245, the UDM 303, and a NSACF 501. The detailed description of the Figures 7A-7B is as follows:
At Step 0a, the UE 205 has performed a registration with the AMF1 240 and one or more network slices are included in the Allowed NSSAI (see block 701). In the depicted example, it is assumed that a first network slice (i.e., identified by S-NSSAI#1) is included in the Allowed NSSAI and that S-NSSAI#1 is subject to NSAC.

At Step 0b, the AMF1 240 updates the NSACF 501 to count the UE 205 for S-NSSAI#1, i.e., the NSACF 501 inserts the UE 205 in the list of UEs registered with the S-NSSAI#1 (see messaging 703). For example, the AMF1 240 may invoke a service request to update the NSACF 501 by including at least the following parameters: UE-ID, S-NSSAI#1, and an indication to add (or insert/count) the UE 205. Here, the parameter UE-ID may be the Subscription Permanent Identifier ("SUPI") of the UE 205. Note that the parameter S-NSSAI#1 is network slice identifier for which the update is performed.

At Step 0c, the NSACF 501 maintains a list of UEs registered for the S-NSSAIs it serves (see block 705). This list includes the UE-ID (e.g., SUPI) of each UE.

At Step 0d, after the AMF1 240 has determined and updated the UE 205 with the Allowed NSSAI, the AMF1 240 sends the Allowed NSSAI (assigned to the UE 205) to the UDM 303 (see messaging 707). For this purpose, the AMF1 240 may use a Nudm_UECM_Update request message. Alternatively, the AMF1 240 may use the Nudm_SDM_Info service to update the UDM 303. The UDM 303 stores the current Allowed NSSAI in the UE context. Each time when the Allowed NSSAI changes (e.g., after a UE Configuration Update procedure), the AMF1 240 may send the new Allowed NSSAI to the UDM 303.

Note that the UDM 303 sends the stored Allowed NSSAI to each AMF which requests the UE subscription data. When a UE 205 deregisters from the network and the AMF performs Nudm_SDM_Unsubscribe service operation, the UDM 303 deletes the stored Allowed NSSAI sent from this AMF.

At Step 1, the UE 205 moves to another area (e.g., to another tracking area ("TA")) in the (R)AN 301 and the UE 205 performs NAS registration request procedure (see messaging 709). The NAS registration request message may include at least the UE-ID (e.g., SUCI or 5G-GUTI), the Requested NSSAI (including S-NSSAI#1) and other parameters.

At Step 2a, the AMF2 245 cannot fetch the UE context from the AMF1 240 (see block 711). In one embodiment, this may happen because the AMF1 240 and AMF2 245 are isolated AMFs, i.e., do not have N10 interface. In another embodiment, this may happen because the UE 205 uses the Subscription Concealed Identifier ("SUCI") to register with the network, and thus, the AMF2 245 cannot determine the old AMF identity.

At Step 2b, the AMF2 245 and UE 205 perform the authentication, security and other procedures included in the registration procedures (e.g., as in clause 4.2.2.2.2 in 3GPP TS 23.502 - see block 713).

At Step 3, the AMF2 245 updates the UDM 303 with the new Allowed NSSAI assigned to the UE 205 (see messaging 715). The AMF2 245 may send Nudm_UECM_Update request message to the UDM 303 including the current Allowed NSSAI. The UDM 303 updates the stored Allowed NSSAI with the new received one.

At Step 4, the AMF2 245 completes the registration procedure, e.g., by sending a NAS registration accept message to the UE 205 containing the (new) Allowed NSSAI and, optionally, the Rejected NSSAI (see messaging 717). In the depicted example, it is assumed that the AMF2 245 supports the requested S-NSSAI#1. Therefore, the Allowed NSSAI includes S-NSSAI#1.

At Step 5a, the AMF2 245 performs the NSAC update procedure for all S-NSSAIs included in the Allowed NSSAI and subject to NSAC (see messaging 719). In the particular example, the UE 205 is registered to S-NSSAI#1 and the AMF2 245 sends an update request to the NSACF 501 to add/insert the UE 205 in the list of UEs registered to the S-NSSAI. As discussed above with reference to Figure 5A, the AMF2 245 may perform Step 5a before or after sending the Registration Accept message, e.g., based on whether EAC mode is activated.

At Step 5b, because the NSACF 501 stores a UE status for this UE-ID (i.e., the UE 205 is registered with the S-NSSAI), the NSACF 501 will keep the UE status registered (see block 721).

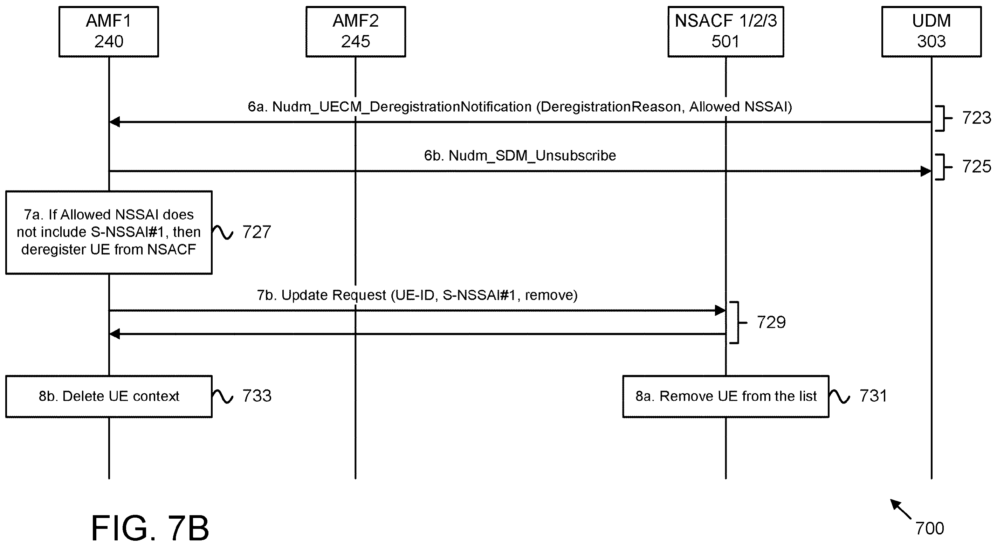

Continuing on Figure 7B, at Step 6a, after the UDM 303 has been updated in Step 3 with a new serving AMF, the UDM 303 invokes Nudm_UECM_DeregistrationNotification service operation towards the old AMF, i.e., the AMF1 240 (see messaging 525). If the UDM 303 stores Allowed NSSAI sent from the new AMF (e.g., AMF2 245), then the UDM 303 decides to include the Allowed NSSAI in the Deregistration Notification to the AMF1 240. The Deregistration Notification includes a Deregistration Reason which can be one of the reasons discussed above with reference to Figure 3.

At Step 6b, the AMF1 240 sends a Nudm_SDM_Unsubscribe request message to delete its subscription to be notified for any UE subscription changes (see messaging 725).

At Step 7a, the AMF1 240 inspects the received Allowed NSSAI from the UDM 303. If the Allowed NSSAI does not include the S-NSSAI#1 (which is subject to NSAC), then the AMF1 240 concludes that the UE 205 has registered with a potential new AMF without UE context transfer from the AMF1 240. The AMF1 240 then determines to send update request to the NSACF 501 to remove the UE 205 for the S-NSSAI#1. However, if the Allowed NSSAI includes the S-NSSAI#1 (which is subject to NSAC), then the AMF1 240 determines to not perform NSAC update to the NSACF 501 to remove the UE 205. In the depicted embodiments, it is assumed that S-NSSAI#1 is not included in the Allowed NSSAI.

At Step 7b, the AMF1 240 sends update request message to NSACF 501 including the UE-ID, S-NSSAI#1, and an indication of removal (i.e., reduce the UE count) according to Step 7a (see messaging 729).

At Step 8a, the NSACF 501 removes the UE 205 from the list of UEs registered with the S-NSSAI#1 (see block 731). When the NSACF 501 removes the UE 205, the NSACF 501 also reduces the counter of registered UEs for the S-NSSAI#1. The NSACF 501 may acknowledge the removal of the UE-ID.

At Step 8b, the AMF1 240 deletes the UE context of the UE 205 (and clears or terminates all associations with other NFs for this UE 205), e.g., after receiving the acknowledgement from the NSACF 501 (see block 733).

The benefit is the third solution depicted in Figures 7A-7B is that no enhancements to the NSACF are needed. Instead, the UDM functionality needs to be updated to store the Allowed NSSAI. Correspondingly the interface between the AMF and the NSACF needs to be enhanced to allow the transmission of the Allowed NSSAI, thus involving enhancements to the AMF.

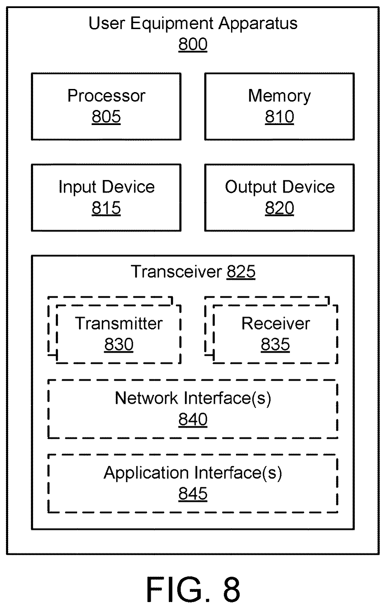

Figure 8 depicts a user equipment apparatus 800 that may be involved in NSAC update, according to embodiments of the disclosure. In various embodiments, the user equipment apparatus 800 is used to implement one or more of the solutions described above. The user equipment apparatus 800 may be one embodiment of the remote unit 105 and/or the UE 205, described above. Furthermore, the user equipment apparatus 800 may include a processor 805, a memory 810, an input device 815, an output device 820, and a transceiver 825.

In some embodiments, the input device 815 and the output device 820 are combined into a single device, such as a touchscreen. In certain embodiments, the user equipment apparatus 800 may not include any input device 815 and/or output device 820. In various embodiments, the user equipment apparatus 800 may include one or more of: the processor 805, the memory 810, and the transceiver 825, and may not include the input device 815 and/or the output device 820.

As depicted, the transceiver 825 includes at least one transmitter 830 and at least one receiver 835. In some embodiments, the transceiver 825 communicates with one or more cells (or wireless coverage areas) supported by one or more base units 121. In various embodiments, the transceiver 825 is operable on unlicensed spectrum. Moreover, the transceiver 825 may include multiple UE panel supporting one or more beams. Additionally, the transceiver 825 may support at least one network interface 840 and/or application interface 845. The application interface(s) 845 may support one or more APIs. The network interface(s) 840 may support 3GPP reference points, such as NWu, Uu, N1, etc. Other network interfaces 840 may be supported, as understood by one of ordinary skill in the art.

The processor 805, in one embodiment, may include any known controller capable of executing computer-readable instructions and/or capable of performing logical operations. For example, the processor 805 may be a microcontroller, a microprocessor, a central processing unit ("CPU"), a graphics processing unit ("GPU"), an auxiliary processing unit, a field programmable gate array ("FPGA"), or similar programmable controller. In some embodiments, the processor 805 executes instructions stored in the memory 810 to perform the methods and routines described herein. The processor 805 is communicatively coupled to the memory 810, the input device 815, the output device 820, and the transceiver 825. In certain embodiments, the processor 805 may include an application processor (also known as "main processor") which manages application-domain and operating system ("OS") functions and a baseband processor (also known as "baseband radio processor") which manages radio functions.

In various embodiments, the processor 805 controls the user equipment apparatus 800 to implement the above described UE behaviors. For example, using the transceiver 825 the processor 805 may perform a first registration procedure with a first AMF to register with a first network slice subject to NSAC. Additionally, the processor 805 may perform a second registration procedure with a second AMF. In certain embodiments, the second AMF also supports the first network slice, such that the second AMF updates the registration at a NSACF of the apparatus 800 with the first network slice. In other embodiments, the second AMF does not support the first network slice, such that the first AMF updates the NSACF to remove the registration of the apparatus 800 with the first network slice, as discussed herein.

The memory 810, in one embodiment, is a computer readable storage medium. In some embodiments, the memory 810 includes volatile computer storage media. For example, the memory 810 may include a RAM, including dynamic RAM ("DRAM"), synchronous dynamic RAM ("SDRAM"), and/or static RAM ("SRAM"). In some embodiments, the memory 810 includes non-volatile computer storage media. For example, the memory 810 may include a hard disk drive, a flash memory, or any other suitable non-volatile computer storage device. In some embodiments, the memory 810 includes both volatile and non-volatile computer storage media.

In some embodiments, the memory 810 stores data related to mobile operation. For example, the memory 810 may store various parameters, configurations, resource assignments, policies, and the like as described above. In certain embodiments, the memory 810 also stores program code and related data, such as an operating system or other controller algorithms operating on the user equipment apparatus 800.

The input device 815, in one embodiment, may include any known computer input device including a touch panel, a button, a keyboard, a stylus, a microphone, or the like. In some embodiments, the input device 815 may be integrated with the output device 820, for example, as a touchscreen or similar touch-sensitive display. In some embodiments, the input device 815 includes a touchscreen such that text may be input using a virtual keyboard displayed on the touchscreen and/or by handwriting on the touchscreen. In some embodiments, the input device 815 includes two or more different devices, such as a keyboard and a touch panel.

The output device 820, in one embodiment, is designed to output visual, audible, and/or haptic signals. In some embodiments, the output device 820 includes an electronically controllable display or display device capable of outputting visual data to a user. For example, the output device 820 may include, but is not limited to, an LCD display, an LED display, an OLED display, a projector, or similar display device capable of outputting images, text, or the like to a user. As another, non-limiting, example, the output device 820 may include a wearable display separate from, but communicatively coupled to, the rest of the user equipment apparatus 800, such as a smart watch, smart glasses, a heads-up display, or the like. Further, the output device 820 may be a component of a smart phone, a personal digital assistant, a television, a table computer, a notebook (laptop) computer, a personal computer, a vehicle dashboard, or the like.

In certain embodiments, the output device 820 includes one or more speakers for producing sound. For example, the output device 820 may produce an audible alert or notification (e.g., a beep or chime). In some embodiments, the output device 820 includes one or more haptic devices for producing vibrations, motion, or other haptic feedback. In some embodiments, all or portions of the output device 820 may be integrated with the input device 815. For example, the input device 815 and output device 820 may form a touchscreen or similar touch-sensitive display. In other embodiments, the output device 820 may be located near the input device 815.

The transceiver 825 communicates with one or more network functions of a mobile communication network via one or more access networks. The transceiver 825 operates under the control of the processor 805 to transmit messages, data, and other signals and also to receive messages, data, and other signals. For example, the processor 805 may selectively activate the transceiver 825 (or portions thereof) at particular times in order to send and receive messages.

The transceiver 825 includes at least transmitter 830 and at least one receiver 835. One or more transmitters 830 may be used to provide UL communication signals to a base unit 121, such as the UL transmissions described herein. Similarly, one or more receivers 835 may be used to receive DL communication signals from the base unit 121, as described herein. Although only one transmitter 830 and one receiver 835 are illustrated, the user equipment apparatus 800 may have any suitable number of transmitters 830 and receivers 835. Further, the transmitter(s) 830 and the receiver(s) 835 may be any suitable type of transmitters and receivers. In one embodiment, the transceiver 825 includes a first transmitter/receiver pair used to communicate with a mobile communication network over licensed radio spectrum and a second transmitter/receiver pair used to communicate with a mobile communication network over unlicensed radio spectrum.

In certain embodiments, the first transmitter/receiver pair used to communicate with a mobile communication network over licensed radio spectrum and the second transmitter/receiver pair used to communicate with a mobile communication network over unlicensed radio spectrum may be combined into a single transceiver unit, for example a single chip performing functions for use with both licensed and unlicensed radio spectrum. In some embodiments, the first transmitter/receiver pair and the second transmitter/receiver pair may share one or more hardware components. For example, certain transceivers 825, transmitters 830, and receivers 835 may be implemented as physically separate components that access a shared hardware resource and/or software resource, such as for example, the network interface 840.

In various embodiments, one or more transmitters 830 and/or one or more receivers 835 may be implemented and/or integrated into a single hardware component, such as a multi-transceiver chip, a system-on-a-chip, an ASIC, or other type of hardware component. In certain embodiments, one or more transmitters 830 and/or one or more receivers 835 may be implemented and/or integrated into a multi-chip module. In some embodiments, other components such as the network interface 840 or other hardware components/circuits may be integrated with any number of transmitters 830 and/or receivers 835 into a single chip. In such embodiment, the transmitters 830 and receivers 835 may be logically configured as a transceiver 825 that uses one more common control signals or as modular transmitters 830 and receivers 835 implemented in the same hardware chip or in a multi-chip module.

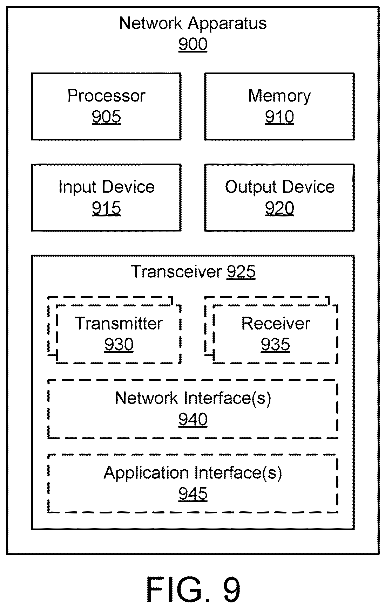

Figure 9 depicts a network apparatus 900 that may be used for resolving race conditions during a NSAC update, according to embodiments of the disclosure. In one embodiment, network apparatus 900 may be one implementation of an access management function in a mobile communication network, such as the AMF 143, described above. Furthermore, the network apparatus 900 may include a processor 905, a memory 910, an input device 915, an output device 920, and a transceiver 925.

In some embodiments, the input device 915 and the output device 920 are combined into a single device, such as a touchscreen. In certain embodiments, the network apparatus 900 may not include any input device 915 and/or output device 920. In various embodiments, the network apparatus 900 may include one or more of: the processor 905, the memory 910, and the transceiver 925, and may not include the input device 915 and/or the output device 920.

As depicted, the transceiver 925 includes at least one transmitter 930 and at least one receiver 935. Here, the transceiver 925 communicates with one or more remote units 105. Additionally, the transceiver 925 may support at least one network interface 940 and/or application interface 945. The application interface(s) 945 may support one or more APIs. The network interface(s) 940 may support 3GPP reference points, such as NWu, Uu, N1, N2, N3, N4, etc. Other network interfaces 940 may be supported, as understood by one of ordinary skill in the art.

The processor 905, in one embodiment, may include any known controller capable of executing computer-readable instructions and/or capable of performing logical operations. For example, the processor 905 may be a microcontroller, a microprocessor, a CPU, a GPU, an auxiliary processing unit, a FPGA, or similar programmable controller. In some embodiments, the processor 905 executes instructions stored in the memory 910 to perform the methods and routines described herein. The processor 905 is communicatively coupled to the memory 910, the input device 915, the output device 920, and the transceiver 925.

In various embodiments, the processor 905 controls the network apparatus 900 to implement the above described NSACF behaviors. For example, via the network interface 940 the processor 905 may receive an indication for preliminary removal of a first UE registered with a first network slice, said indication received from a first AMF (e.g., from AMF1). The processor 905 determines (i.e., checks) a registration status of the first UE and selectively removes the first UE from a list of UEs registered with the first network slice based on the determination.

In some embodiments, the processor 905 sends a request to a second AMF (e.g., from AMF2) in response to determining that the first UE is registered at the apparatus 900 and that a last registration update was performed by the second AMF, said request for verifying whether the first UE is registered with the first network slice. In such embodiments, the processor 905 receives a reply from the second AMF indicating a result of the UE registration with the first network slice.

In one embodiment, selectively removing the first UE from a list of UEs registered with the first network slice based on the determination comprises removing the first UE from the list of registered devices in response to the reply from the second AMF indicating that the first UE is not registered with the first network slice. In another embodiment, selectively removing the first UE from a list of UEs registered with the first network slice based on the determination comprises keeping the first UE in the list of registered devices in response to the reply from the second AMF indicating that the first UE is registered with the first network slice.

In some embodiments, the processor 905 removes the first UE from a list of UEs registered with the first network slice in response to determining that the first UE is registered at the apparatus 900 and that a last registration update was performed by the first AMF. In certain embodiments, the processor 905 ignores the indication for preliminary removal in response to determining that the first UE is not registered at the apparatus 900.

In some embodiments, the processor 905 further stores an AMF-ID of a latest AMF requesting to register a device with the first network slice and determines whether a last registration update for the first UE was performed by the first AMF by comparing an AMF ID of the first AMF to the stored AMF ID in response to receiving the indication.

In various embodiments, the processor 905 controls the network apparatus 900 to implement the above described AMF behaviors. For example, when acting at the AMF1, the processor 905 may receive (e.g., via the network interface 940) a first request (e.g., a deregistration notification) to remove a registration context of a first UE, where the first UE was previously registered with a first network slice via the apparatus 900. The processor 905 determines whether the registration context of the first UE was previously retrieved by a second AMF. Via the network interface 940, the processor 905 sends an indication of removal of the first UE from a list of a devices registered with the first network slice to a NSACF in response to determining that the registration context of the first UE was not previously retrieved.

In some embodiments, the indication of removal of the first UE includes a preliminary removal indication for removing the first UE from the list of a devices registered with a first network slice. In such embodiments, the NSACF verifies that the apparatus 900 is the latest AMF to update a registration of the first UE.

In some embodiments, the first request is received from a Unified Data Management function. In some embodiments, the processor 905 receives (e.g., via the network interface 940) an acknowledgment from the NSACF in response to sending the indication of removal and deletes the registration context of the first UE in response to the acknowledgment.

In some embodiments, the processor 905 sends (e.g., via the network interface 940) a status request to the NSACF (e.g., sending a *Nnsacf_NSAC_CheckUEStatus* request) in response to determining that the registration context of the first UE was not previously retrieved and prior to sending the indication of removal and receives (e.g., also via the network interface 940) a status reply from the NSACF (e.g., receiving a *Nnsacf_NSAC_CheckUEStatus* response). In such embodiments, the indication of removal is sent in response to the status reply indicating that the first UE is registered at the NSACF by the apparatus 900.

When acting as the AMF2, the processor 905 may receive a status request (e.g., *Namf_NSAC_CheckUERegistration* request) from a NSACF for checking whether a UE is registered with a network slice via the apparatus 900. In one embodiment, the processor 905 controls the network interface 940 to send a positive response, i.e., when the second device is registered with the network slice via the apparatus 900. In another embodiment, the processor 905 controls the network interface 940 to send a negative response, i.e., when the second device is not registered with the network slice via the apparatus 900.

The memory 910, in one embodiment, is a computer readable storage medium. In some embodiments, the memory 910 includes volatile computer storage media. For example, the memory 910 may include a RAM, including dynamic RAM ("DRAM"), synchronous dynamic RAM ("SDRAM"), and/or static RAM ("SRAM"). In some embodiments, the memory 910 includes non-volatile computer storage media. For example, the memory 910 may include a hard disk drive, a flash memory, or any other suitable non-volatile computer storage device. In some embodiments, the memory 910 includes both volatile and non-volatile computer storage media.

In some embodiments, the memory 910 stores data related to resolving race conditions during a NSAC update. For example, the memory 910 may store parameters, configurations, resource assignments, policies, and the like, as described above. In certain embodiments, the memory 910 also stores program code and related data, such as an operating system or other controller algorithms operating on the network apparatus 900.

The input device 915, in one embodiment, may include any known computer input device including a touch panel, a button, a keyboard, a stylus, a microphone, or the like. In some embodiments, the input device 915 may be integrated with the output device 920, for example, as a touchscreen or similar touch-sensitive display. In some embodiments, the input device 915 includes a touchscreen such that text may be input using a virtual keyboard displayed on the touchscreen and/or by handwriting on the touchscreen. In some embodiments, the input device 915 includes two or more different devices, such as a keyboard and a touch panel.

The output device 920, in one embodiment, is designed to output visual, audible, and/or haptic signals. In some embodiments, the output device 920 includes an electronically controllable display or display device capable of outputting visual data to a user. For example, the output device 920 may include, but is not limited to, an LCD display, an LED display, an OLED display, a projector, or similar display device capable of outputting images, text, or the like to a user. As another, non-limiting, example, the output device 920 may include a wearable display separate from, but communicatively coupled to, the rest of the network apparatus 900, such as a smart watch, smart glasses, a heads-up display, or the like. Further, the output device 920 may be a component of a smart phone, a personal digital assistant, a television, a table computer, a notebook (laptop) computer, a personal computer, a vehicle dashboard, or the like.

In certain embodiments, the output device 920 includes one or more speakers for producing sound. For example, the output device 920 may produce an audible alert or notification (e.g., a beep or chime). In some embodiments, the output device 920 includes one or more haptic devices for producing vibrations, motion, or other haptic feedback. In some embodiments, all or portions of the output device 920 may be integrated with the input device 915. For example, the input device 915 and output device 920 may form a touchscreen or similar touch-sensitive display. In other embodiments, the output device 920 may be located near the input device 915.

The transceiver 925 includes at least transmitter 930 and at least one receiver 935. One or more transmitters 930 may be used to communicate with the UE, as described herein. Similarly, one or more receivers 935 may be used to communicate with network functions in the NPN, PLMN and/or RAN, as described herein. Although only one transmitter 930 and one receiver 935 are illustrated, the network apparatus 900 may have any suitable number of transmitters 930 and receivers 935. Further, the transmitter(s) 930 and the receiver(s) 935 may be any suitable type of transmitters and receivers.

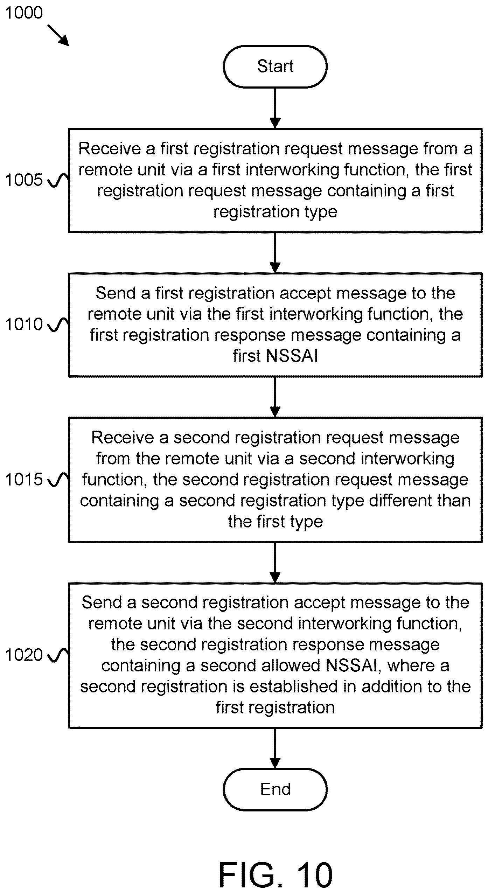

Figure 10 depicts one embodiment of a method 1000 for resolving race conditions during a NSAC update, according to embodiments of the disclosure. In various embodiments, the method 1000 is performed by a network slice admission control function in a mobile communication network, such as the NSACF 146, the NSCAF 250, the NSACF 501, and/or the network apparatus 900, described above. In some embodiments, the method 1000 is performed by a processor, such as a microcontroller, a microprocessor, a CPU, a GPU, an auxiliary processing unit, a FPGA, or the like.

The method 1000 begins and receives 1005 an indication from a first AMF, said indication for preliminary removal of a first UE registered with a first network slice. The method 1000 includes determining 1010 (i.e., checking) a registration status of the first UE. The method 1000 includes selectively removing 1015 the first UE from a list of devices registered with the first network slice based on the determination. The method 1000 ends.

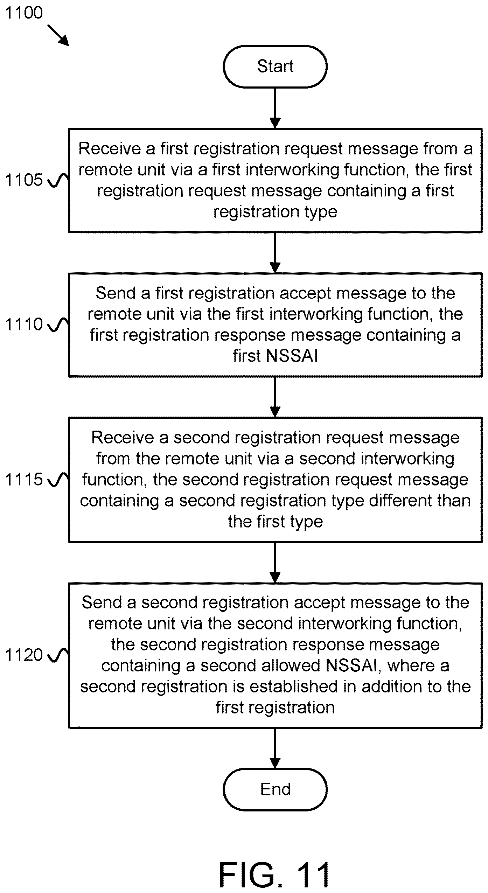

Figure 11 depicts one embodiment of a method 1100 for resolving race conditions during a NSAC update, according to embodiments of the disclosure. In various embodiments, the method 1100 is performed by a first access management function in a mobile communication network, such as the AMF 143, the AMF1 240, and/or the network apparatus 900, described above, described above, described above. In some embodiments, the method 1100 is performed by a processor, such as a microcontroller, a microprocessor, a CPU, a GPU, an auxiliary processing unit, a FPGA, or the like.

The method 1100 begins and receives 1105 a first request to remove a registration context of a first UE, the first UE having previously registered with a first network slice via the first access management function. The method 1100 includes determining 1110 whether the registration context of the first device was previously retrieved by a second access management function. The method 1100 further includes sending 1115 an indication of removal of the first device from a list of a devices registered with the first network slice to a network slice admission control function ("NSACF") in response to determining that the registration context of the first device was not previously retrieved. The method 1100 ends.

Disclosed herein is a first apparatus for resolving race conditions during a NSAC update, according to embodiments of the disclosure. The first apparatus may be implemented by a network slice admission control function ("NSACF") in a mobile communication network, such as the NSACF 146, the NSCAF 250, the NSACF 501, and/or the network apparatus 900, described above. The first apparatus includes a processor and a network interface that communicates with at least one network function (e.g., AMF1, AMF2) in the mobile communication network, said mobile communication network supporting at least one network slice. The processor receives an indication for preliminary removal of a first device (e.g., a first UE) registered with a first network slice, said indication received from a first access management function (e.g., from AMF1). The processor determines (i.e., checks) a registration status of the first device and selectively removes the first device from a list of devices registered with the first network slice based on the determination.

In some embodiments, the processor sends a request to a second access management function (e.g., from AMF2) in response to determining that the first device is registered at the first apparatus and that a last registration update was performed by the second access management function, said request for verifying whether the first device is registered with the first network slice. In such embodiments, the processor receives a reply from the second access management function indicating a result of the UE registration with the first network slice.

In one embodiment, selectively removing the first device from a list of devices registered with the first network slice based on the determination comprises removing the first device from the list of registered devices in response to the reply from the second access management function indicating that the first device is not registered with the first network slice. In another embodiment, selectively removing the first device from a list of devices registered with the first network slice based on the determination comprises keeping the first device in the list of registered devices in response to the reply from the second access management function indicating that the first device is registered with the first network slice.

In some embodiments, the processor removes the first device from a list of devices registered with the first network slice in response to determining that the first device is registered at the first apparatus and that a last registration update was performed by the first access management function. In certain embodiments, the processor ignores the indication for preliminary removal in response to determining that the first device is not registered at the first apparatus.

In some embodiments, the processor further stores an AMF-ID of a latest access management function requesting to register a device with the first network slice and determines whether a last registration update for the first device was performed by the first access management function by comparing an AMF ID of the first access management function to the stored AMF ID in response to receiving the indication.

Disclosed herein is a first method for resolving race conditions during a NSAC update, according to embodiments of the disclosure. The first method may be performed by a network slice admission control function ("NSACF") in a mobile communication network, such as the NSACF 146, the NSACF 250, the NSACF 501, and/or the network apparatus 900. The first method includes receiving an indication for preliminary removal of a first device (i.e., a first UE) registered with a first network slice, said indication received by NSACF from a first access management function (e.g., AMF1). The first method includes determining (i.e., checking) a registration status of the first device and selectively removing the first device from a list of devices registered with the first network slice based on the determination.

In some embodiments, the first method includes sending a request to a second access management function (e.g., from AMF2) upon determining that the first device is registered at the NSACF and that a last registration update for the first device was performed by the second access management function, said request for verifying whether the first device is registered with the first network slice. In such embodiments, the first method further includes receiving a reply from the second access management function indicating a result of the device registration with the first network slice.

In one embodiment, selectively removing the first device from a list of devices registered with the first network slice based on the determination comprises removing the first device from the list of registered devices in response to the reply from the second access management function indicating that the first device is not registered with the first network slice. In another embodiment, selectively removing the first device from a list of devices registered with the first network slice based on the determination comprises keeping the first device in the list of registered devices in response to the reply from the second access management function indicating that the first device is registered with the first network slice.

In some embodiments, the first method includes removing the first device from a list of devices registered with the first network slice in response to determining that the first device is registered at the NSACF and that a last registration update was performed by the first access management function. In certain embodiments, the first method includes ignoring the indication for preliminary removal in response to determining that the first device is not registered at the NSACF.

In some embodiments, the first method further includes storing an AMF-ID of a latest access management function requesting to register a device with the first network slice and determining whether a last registration update for the first device was performed by the first access management function by comparing an AMF ID of the first access management device to the stored AMF ID in response to receiving the indication.

Disclosed herein is a second apparatus for resolving race conditions during a NSAC update, according to embodiments of the disclosure. The second apparatus may be implemented by a first access management function in a mobile communication network, such as the AMF 143, the AMF1 240, and/or the network apparatus 900, described above. The second apparatus includes a processor and a network interface that communicates with network slice admission control function ("NSACF") in a mobile communication network. The processor receives a first request (e.g., a deregistration notification) to remove a registration context of a first device (i.e., a first UE), where the first device was previously registered with a first network slice via the second apparatus. The processor determines whether the registration context of the first device was previously retrieved by another (i.e., second) access management function. Via the network interface, the processor sends an indication of removal of the first device from a list of a devices registered with the first network slice to a network slice admission control function ("NSACF") in response to determining that the registration context of the first device was not previously retrieved.

In some embodiments, the indication of removal of the first device includes a preliminary removal indication for removing the first device from the list of a devices registered with a first network slice. In such embodiments, the NSACF verifies that the second apparatus is the latest access management function to update a registration of the first device.

In some embodiments, the first request is received from a Unified Data Management function. In some embodiments, the processor receives an acknowledgment from the NSACF in response to sending the indication of removal and deletes the registration context of the first device in response to the acknowledgment.

In some embodiments, the processor sends a status request to the NSACF (e.g., sending a Nnsacf_NSAC_CheckUEStatus request) in response to determining that the registration context of the first device was not previously retrieved and prior to sending the indication of removal and receives a status reply from the NSACF (e.g., receiving a Nnsacf_NSAC_CheckUEStatus response). In such embodiments, the indication of removal is sent in response to the status reply indicating that the first device is registered at the NSACF by the second apparatus.

Disclosed herein is a second method for resolving race conditions during a NSAC update, according to embodiments of the disclosure. The second method may be performed by a first access management function in a mobile communication network, such as the AMF 143, the AMF1 240, and/or the network apparatus 900, described above. The second method includes receiving a first request (i.e., a deregistration notification) to remove a registration context of a first device (i.e., a first UE), where the first device was previously registered with a first network slice via the first access management function. The second method includes determining whether the registration context of the first device was previously retrieved by a second access management function and sending an indication of removal of the first device from a list of a devices registered with the first network slice to a NSACF in response to determining that the registration context of the first device was not previously retrieved.

In some embodiments, the indication of removal of the first device includes a preliminary removal indication for removing the first device from the list of a devices registered with a first network slice. In such embodiments, the NSACF verifies that the first access management function is the latest access management function to update a registration of the first device.

In some embodiments, the first request is received from a Unified Data Management function. In some embodiments, the second method further includes receiving an acknowledgment from the NSACF in response to sending the indication of removal and deleting the registration context of the first device in response to the acknowledgment.

In some embodiments, the second method further includes sending a status request to the NSACF (e.g., sending a Nnsacf_NSAC_CheckUEStatus request) in response to determining that the registration context of the first device was not previously retrieved and prior to sending the indication of removal and receiving a status reply from the NSACF (e.g., receiving a Nnsacf_NSAC_CheckUEStatus response). In such embodiments, the indication of removal is sent in response to the status reply indicating that the first device is registered at the NSACF by the first access management function.

Embodiments may be practiced in other specific forms. The described embodiments are to be considered in all respects only as illustrative and not restrictive. The scope of the invention is, therefore, indicated by the appended claims rather than by the foregoing description. All changes which come within the meaning and range of equivalency of the claims are to be embraced within their scope.

Further aspects of the invention are provided by the subject matter of the following clauses:
Clause 1. A method of a network slice admission control function ("NSACF") in a mobile communication network, the method comprising:
   receiving an indication for preliminary removal of a first device registered with a first network slice, said indication received at the NSACF from a first access management function;
   determining a registration status of the first device; and
   selectively removing the first device from a list of devices registered with the first network slice based on the determination.
Clause 2. The method of Clause 1, further comprising:
   sending a request to a second access management function in response to determining that the first device is registered at the NSACF and that a last registration update for the first device was performed by the second access management function, said request for verifying whether the first device is registered with the first network slice; and
   receiving a reply from the second access management function indicating a result of the device registration with the first network slice.
Clause 3. The method of Clause 2, wherein selectively removing the first device from a list of devices registered with the first network slice based on the determination comprises removing the first device from the list of registered devices in response to the reply from the second access management function indicating that the first device is not registered with the first network slice.
Clause 4. The method of Clause 2, wherein selectively removing the first device from a list of devices registered with the first network slice based on the determination comprises keeping the first device in the list of registered devices in response to the reply from the second access management function indicating that the first device is registered with the first network slice.
Clause 5. The method of Clause 1, further comprising removing the first device from a list of devices registered with the first network slice in response to determining that the first device is registered at the NSACF and that a last registration update was performed by the first access management function.
Clause 6. The method of Clause 1, further comprising:
   storing an access and mobility management function ("AMF") identity ("ID") of a latest access management function requesting to register a device with the first network slice; and
   determining whether a last registration update for the first device was performed by the first access management function by comparing an AMF ID of the first access management device to the stored AMF ID in response to receiving the indication.
Clause 7. A network slice admission control apparatus in a mobile communication network, the apparatus comprising:
   a network interface that communicates with at least one network function in the mobile communication network, said mobile communication network supporting at least one network slice; and
   a processor that:
      receives an indication for preliminary removal of a first device registered with a first network slice, said indication received from a first access management function;
      determines a registration status of the first device; and
      selectively removes the first device from a list of devices registered with the first network slice based on the determination.
Clause 8. The apparatus of Clause 7, wherein the processor further:
   sends a request to a second access management function in response to determining that the first device is registered at the apparatus and that a last registration update was performed by the second access management function, said request for verifying whether the first device is registered with the first network slice;
   receives a reply from the second access management function indicating a result of the UE registration with the first network slice.
Clause 9. The apparatus of Clause 8, wherein selectively removing the first device from a list of devices registered with the first network slice based on the determination comprises removing the first device from the list of registered devices in response to the reply from the second access management function indicating that the first device is not registered with the first network slice.
Clause 10. The apparatus of Clause 8, wherein selectively removing the first device from a list of devices registered with the first network slice based on the determination comprises keeping the first device in the list of registered devices in response to the reply from the second access management function indicating that the first device is registered with the first network slice.
Clause 11. The apparatus of Clause 7, wherein the processor removes the first device from a list of devices registered with the first network slice in response to determining that the first device is registered at the apparatus and that a last registration update was performed by the first access management function.
Clause 12. The apparatus of Clause 7, wherein the processor further:
   stores an access and mobility management function ("AMF") identity ("ID") of a latest access management function requesting to register a device with the first network slice; and
   determines whether a last registration update for the first device was performed by the first access management function by comparing an AMF ID of the first access management function to the stored AMF ID in response to receiving the indication.
Clause 13. A method of a first access management function in a mobile communication network, the method comprising:
   receiving a first request to remove a registration context of a first device, the first device having previously registered with a first network slice via the first access management function;
   determining whether the registration context of the first device was previously retrieved by a second access management function; and
   sending an indication of removal of the first device from a list of a devices registered with the first network slice to a network slice admission control function ("NSACF") in response to determining that the registration context of the first device was not previously retrieved.
Clause 14. The method of Clause 13, wherein the indication of removal of the first device comprises a preliminary removal to remove the first device from the list of a devices registered with a first network slice, wherein the NSACF verifies that the first access management function is the latest access management function to update a registration of the first device.
Clause 15. The method of Clause 13, wherein the first request is received from a Unified Data Management function, the method further comprising:
   receiving an acknowledgment from the NSACF in response to sending the indication of removal; and
   deleting the registration context of the first device in response to the acknowledgment.
Clause 16. The method of Clause 13, further comprising:
   sending a status request to the NSACF in response to determining that the registration context of the first device was not previously retrieved and prior to sending the indication of removal; and
   receiving a status reply from the NSACF, wherein the indication of removal is sent in response to the status reply indicating that the first device is registered at the NSACF by the first access management function.
Clause 17. An access management apparatus in a mobile communication network, the apparatus comprising:
   a network interface that communicates with network slice admission control function ("NSACF") in a mobile communication network; and
   a processor that:
      receives a first request to remove a registration context of a first device, the first device having previously registered with a first network slice via the apparatus;
      determining whether the registration context of the first device was previously retrieved by a second access management function; and
      sending an indication of removal of the first device from a list of a devices registered with the first network slice to a network slice admission control function ("NSACF") in response to determining that the registration context of the first device was not previously retrieved.
Clause 18. The apparatus of Clause 17, wherein the indication of removal of the first device comprises a preliminary removal to remove the first device from the list of a devices registered with a first network slice, wherein the NSACF verifies that the apparatus is the latest access management function to update a registration of the first device.
Clause 19. The apparatus of Clause 17, wherein the first request is received from a Unified Data Management function, wherein the processor further:
   receives an acknowledgment from the NSACF in response to sending the indication of removal; and
   deletes the registration context of the first device in response to the acknowledgment.
Clause 20. The apparatus of Clause 17, wherein the processor further:
   sends a status request to the NSACF in response to determining that the registration context of the first device was not previously retrieved and prior to sending the indication of removal; and
   receives a status reply from the NSACF, wherein the indication of removal is sent in response to the status reply indicating that the first device is registered at the NSACF by the apparatus.

## Claims

1. A network slice admission control function, NSACF, (250) for use in a mobile communication network, the NSACF (250) comprising:
at least one memory (910); and
at least one processor (905) coupled with the at least one memory (910) and configured to cause the NSACF (250) to:
store a list of devices (205) registered with a network slice, the list comprising a first entry of a device identity associated with a first access management function, AMF, identity of a first AMF (240);
receive, from a second AMF (245), a first request comprising the device identity, a second AMF identity, and an indication to increase a number of devices (205) registered with the network slice;
create a second entry in the list of devices (205) registered with the network slice based at least in part on the first request, wherein the second entry associates the device identity with a second AMF identity of the second AMF (245);
receive, from the first AMF (240), a second request comprising an indication to decrease the number of devices (205) registered with the network slice; and
remove the first entry from the list of devices (205) registered with the network slice based at least in part on the second request.

2. The NSACF (250) of claim 1, wherein the at least one processor (905) is configured to cause the NSACF (250) to:
store a current number of devices (205) registered with the network slice;
determine whether the device identity is registered with the network slice in response to the first request; and
maintain the current number of devices (205) registered with the network slice based at least in part on the device identity being already registered with the network slice.

3. The NSACF (250) of claim 1, wherein the at least one processor (905) is configured to cause the NSACF (250) to:
store a current number of devices (205) registered with the network slice;
determine, in response to the second request, that the device identity is registered with the network slice via the second AMF (245); and
maintain the current number of devices (205) registered with the network slice based at least in part on the second entry.

4. The NSACF (250) of claim 1, wherein the at least one processor (905) is configured to cause the NSACF (250) to:
transmit, based on the first request, a response to the second AMF (245) indicating a result of the first request; and
maintain the current number of devices (205) registered with the network slice based at least in part on the response.

5. The NSACF (250) of claim 1, wherein the at least one processor (905) is configured to cause the NSACF (250) to:
create the second entry prior to a reception of the second request; and
maintain the first entry prior to the reception of the second request.

6. The NSACF (250) of claim 1, wherein the at least one processor (905) is configured to cause the NSACF (250) to:
determine a registration status of a device (205) corresponding to the device identity in response to the first request; and
create the second entry based at least in part on that the device (205) being already registered with the network slice.

7. The NSACF (250) of claim 1, wherein the at least one processor (905) is configured to cause the NSACF (250) to:
transmit, based on the second request, a reply to the first AMF (240) indicating a result of the second request; and
remove the first entry from the list of devices (205) registered with the network slice without decreasing a current number of devices (205) registered with the network slice.

8. The NSACF (250) of claim 1, wherein the at least one processor (905) is configured to cause the NSACF (250) to:
store an AMF identity of a latest AMF requesting to register a respective device (205) with the network slice; and
determine, in response to the first request, whether a latest registration update for a device (205) corresponding to the device identity was performed by the second AMF (245) based at least in part on the stored AMF identity.

9. A method performed by a network slice admission control function, NSACF, (250), the method comprising:
storing a list of devices (205) registered with a network slice, the list comprising a first entry of a device identity associated with a first access management function, AMF, identity of a first AMF (240);
receiving, from a second AMF (245), a first request comprising the device identity, a second AMF identity, and an indication to increase a number of devices (205) registered with the network slice;
creating a second entry in the list of devices (205) registered with the network slice based at least in part on the first request, wherein the second entry associates the device identity with a second AMF identity of the second AMF (245);
receiving, from the first AMF (240), a second request comprising an indication to decrease the number of devices (205) registered with the network slice; and
removing the first entry from the list of devices (205) registered with the network slice based at least in part on the second request.

10. The method of claim 9, further comprising:
storing a current number of devices (205) registered with the network slice;
determining whether the device identity is registered with the network slice in response to the first request; and
maintaining the current number of devices (205) registered with the network slice based at least in part on the device identity being already registered with the network slice.

11. The method of claim 9, further comprising:
storing a current number of devices (205) registered with the network slice;
determining, in response to the second request, that the device identity is registered with the network slice via the second AMF (245); and
maintaining the current number of devices (205) registered with the network slice based at least in part on the second entry.

12. The method of claim 9, further comprising:
transmitting, based on the first request, a response to the second AMF (245) indicating a result of the first request; and
maintaining the current number of devices (205) registered with the network slice based at least in part on the response.

13. The method of claim 9, wherein creating the second entry comprises:
adding the second entry to the list of devices (205) registered with the network slice prior to a reception of the second request; and
maintaining the first entry prior to the reception of the second request.

14. The method of claim 9, further comprising:
determining a registration status of a device (205) corresponding to the device identity in response to the first request; and
creating the second entry based at least in part on that the device (205) being already registered with the network slice.

15. A computer program comprising code for wireless communication that, when executed by a network slice admission control function, NSACF, (250) causes the NSACF (250) to:
store a list of devices (205) registered with a network slice, the list comprising a first entry of a device identity associated with a first access management function, AMF, identity of a first AMF (240);
receive, from a second AMF (245), a first request comprising the device identity, a second AMF identity, and an indication to increase a number of devices (205) registered with the network slice;
create a second entry in the list of devices (205) registered with the network slice based at least in part on the first request, wherein the second entry associates the device identity with a second AMF identity of the second AMF (245);
receive, from the first AMF (240), a second request comprising an indication to decrease the number of devices (205) registered with the network slice; and
remove the first entry from the list of devices (205) registered with the network slice based at least in part on the second request.
